(19) **Europäisches Patentamt**
**European Patent Office**
**Office européen des brevets**

(11) **EP 4 564 855 A1**

(12) **EUROPEAN PATENT APPLICATION**
published in accordance with Art. 153(4) EPC

(43) Date of publication:
04.06.2025 Bulletin 2025/23

(21) Application number: 23857529.4

(22) Date of filing: 29.06.2023

(51) International Patent Classification (IPC):
*H04W 4/02* (2018.01)    *H04W 4/029* (2018.01)
*A61B 5/103* (2006.01)    *G01S 13/02* (2006.01)

(52) Cooperative Patent Classification (CPC):
A61B 5/103; G01S 13/02; H04W 4/02; H04W 4/029

(86) International application number:
PCT/KR2023/009167

(87) International publication number:
WO 2024/043491 (29.02.2024 Gazette 2024/09)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  26.08.2022  KR 20220107572
08.09.2022  KR 20220113982

(71) Applicant: **Samsung Electronics Co., Ltd.**
**Suwon-si, Gyeonggi-do 16677 (KR)**

(72) Inventors:
• **NAM, Sangsu**
**Suwon-si Gyeonggi-do 16677 (KR)**
• **HWANG, Minkyung**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE FOR PROVIDING LOCATION-BASED SERVICE AND METHOD FOR OPERATING SAME**

(57)    An electronic device, according to one embodiment, comprises: at least one communication circuit; and at least one processor operatively connected to the at least one communication circuit, wherein the at least one processor is configured to: measure a first distance between the electronic device and a first external electronic device and a second distance between the electronic device and a second external electronic device through the at least one communication circuit; determine, on the basis of the first distance and the second distance, whether a first condition that the first external electronic device and the second external electronic device exist in a designated area is satisfied; determine whether a function of the electronic device corresponding to the first condition is registered, on the basis of a determination that the first condition is satisfied; and perform the function of the electronic device corresponding to the first condition, on the basis of a determination that the function of the electronic device corresponding to the first condition is registered, wherein the first distance is measured when a second condition that triggers measurement of the distance between the electronic device and the first external electronic device by the first external electronic device is satisfied, and the second distance is measured when a third condition that triggers measurement of the distance between the electronic device and the second external electronic device by the second external electronic device is satisfied. Other embodiments may be possible.

START

MEASURE DISTANCE BETWEEN ELECTRONIC DEVICE AND SECOND EXTERNAL ELECTRONIC DEVICE AND DISTANCE BETWEEN FIRST EXTERNAL ELECTRONIC DEVICE AND SECOND EXTERNAL ELECTRONIC DEVICE — 811

813

IS SET CONTION SATISIFIED? — NO

YES

815

IS FUNCTION CORRESPONDING TO SET CONTION REGISTERED? — NO

819

OUTPUT INFORMATION INDICATING THAT FIRST EXTERNAL ELECTRONIC DEVICE AND SECOND EXTERNAL ELECTRONIC DEVICE EXIST IN THE SAME SPACE

YES

817

PERFORM FUNCTION CORRESPONDING TO SET CONTION

END

FIG. 8

**Description**

[Technical Field]

The disclosure relates to an electronic device for providing a location-based service and an operating method thereof.

[Background Art]

The Internet, which is a human centered connectivity network where humans generate and consume information, is now evolving to the Internet of things (IoT) network where distributed entities, such as things, exchange and process information. The Internet of everything (IoE) technology may be an example in which a big data processing technology through connection with a cloud server is combined with the IoT technology.

As technology elements, such as a sensing technology, a wired/wireless communication and network infrastructure, a service interface technology, and a security technology have been demanded for implementing the IoT technology, and various technologies for a connection between things such as a sensor network, a machine-to-machine (M2M) communication, machine type communication (MTC), and so forth have been recently researched.

Such an IoT environment may provide intelligent Internet technology (IT) services that create a new value to human life by collecting and analyzing data generated among connected things. The IoT technology may be applied to various services such as a smart home service, a smart building service, a smart city service, a smart car service or connected car service, a smart grid service, a health care service, a smart appliance service, or and an advanced medical service through convergence and combination between an existing IT technology and various industrial applications.

Among various services to which the IoT technology is applied, in a case of the smart home service, various IoT-based services may be provided using various IoT devices.

In an automation service, which is one of various services provided in a smart home service, which is a location-based service, in order to operate a second external electronic device (e.g., an Internet of Things (IoT) device) based on a set condition, an application of an electronic device (e.g., a wearable electronic device) needs to support the automation function. For example, the application of the electronic device is an IoT-based application (e.g., a Samsung™ SmartThings application) which controls and/or manages the second external electronic device. A user of the electronic device may control the second external electronic device by setting a condition (e.g., a condition based on a distance between the electronic device and the second external electronic device) and a function of the second external electronic device corresponding to the condition on the IoT-based application.

In the automation service, not only the electronic device but also a first external electronic device (e.g., another wearable electronic device) may control the second external electronic device. An application of the first external electronic device may also be an IoT-based application which controls and/or manages the second external electronic device and may support an automation function. Like the user of the electronic device, a user of the first external electronic device may control the second external electronic device by setting a condition (e.g., a condition based on a distance between the first external electronic device and the second external electronic device) and a function of the second external electronic device corresponding to the condition on the IoT-based application.

However, currently, the automation service only provides a single-user automation function for the second external electronic device. The single-user automation function may represent an automation function performed by each user. For example, when a set condition of the electronic device is satisfied, the second external electronic device may perform a function corresponding to the set condition of the electronic device.

While the second external electronic device performs the function corresponding to the set condition of the electronic device, because the second external electronic device already performs the function corresponding to the set condition of the electronic device even though a set condition of the first external electronic device is satisfied, the second external electronic device may not perform an operation corresponding to the set condition of the first external electronic device. Alternatively, if the set condition of the first external electronic device is satisfied while the second external electronic device performs the function corresponding to the set condition of the electronic device, the second external electronic device may stop the function corresponding to the set condition of the electronic device which the second external electronic device already performs, and perform the operation corresponding to the set condition of the first external electronic device.

As described above, the single-user automation function currently provided in the automation service provides the automation function by considering only one user, so if a plurality of users exist in a designated area (e.g., the same space), it may be impossible to control the function of the second external electronic device by considering the plurality of users.

[Detailed Description of the Invention]

[Technical Solution]

According to an embodiment of the disclosure, an electronic device may include at least one communication circuit, and at least one processor operably connected to the at least one communication circuit.

According to an embodiment of the disclosure, the at least one processor may be configured to measure, via the at least one communication circuit, a first distance between the electronic device and a first external electronic device and a second distance between the electronic device and a second external electronic device (210).

According to an embodiment of the disclosure, the at least one processor may be further configured to, based on the first distance and the second distance, identify whether a first condition that the first external electronic device and the second external electronic device exist in a designated area is satisfied.

According to an embodiment of the disclosure, the at least one processor may be further configured to, based on identifying that the first condition is satisfied, identify whether a function of the electronic device corresponding to the first condition is registered.

According to an embodiment of the disclosure, the at least one processor may be further configured to, based on identifying that the function of the electronic device corresponding to the first condition is registered, perform the function of the electronic device corresponding to the first condition.

According to an embodiment of the disclosure, the first distance may be measured if a second condition that triggers distance measurement between the electronic device and the first external electronic device is satisfied by the first external electronic device.

According to an embodiment of the disclosure, the second distance may be measured if a third condition that triggers distance measurement between the electronic device and the second external electronic device is satisfied by the second external electronic device.

According to an embodiment of the disclosure, an electronic device may include at least one communication circuit, and at least one processor operably connected to the at least one communication circuit.

According to an embodiment of the disclosure, the at least one processor may be configured to register, via the at least one communication circuit, with a second external electronic device, a first condition that the electronic device and a first external electronic device exist in a designated area, and a function of the second external electronic device corresponding to the first condition.

According to an embodiment of the disclosure, the at least one processor may be further configured to identify whether a second condition which triggers distance measurement between the electronic device and the second external electronic device is satisfied.

According to an embodiment of the disclosure, the at least one processor may be further configured to, based on identifying that the second condition is satisfied, measure, via the at least one communication circuit, a first distance between the electronic device and the second external electronic device.

According to an embodiment of the disclosure, the at least one processor may be further configured to, after measuring the first distance, identify whether the second condition is satisfied.

According to an embodiment of the disclosure, the at least one processor may be further configured to, based on identifying that the second condition is satisfied, measure the first distance via the at least one communication circuit.

According to an embodiment of the disclosure, an operating method of an electronic device may include measuring a first distance between the electronic device and a first external electronic device and a second distance between the electronic device and a second external electronic device (210).

According to an embodiment of the disclosure, the operating method may further include, based on the first distance and the second distance, identifying whether a first condition that the first external electronic device and the second external electronic device exist in a designated area is satisfied.

According to an embodiment of the disclosure, the operating method may further include, based on identifying that the first condition is satisfied, identifying whether a function of the electronic device corresponding to the first condition is registered.

According to an embodiment of the disclosure, the operating method may further include, based on identifying that the function of the electronic device corresponding to the first condition is registered, performing the function of the electronic device corresponding to the first condition.

According to an embodiment of the disclosure, the first distance may be measured if a second condition that triggers distance measurement between the electronic device and the first external electronic device is satisfied by the first external electronic device.

According to an embodiment of the disclosure, the second distance may be measured if a third condition that triggers distance measurement between the electronic device and the second external electronic device is satisfied by the second external electronic device.

According to an embodiment of the disclosure, an operating method of an electronic device may include registering, with a second external electronic device, a first condition that the electronic device and a first external electronic device exist in a designated area, and a function of the second external electronic device corresponding to the first condition.

According to an embodiment of the disclosure, the operating method may further include identifying whether a second condition which triggers distance measurement between the electronic device and the second external electronic device is satisfied.

According to an embodiment of the disclosure, the operating method may further include, based on identifying that the second condition is satisfied, measuring a first distance between the electronic device and the second external electronic device.

According to an embodiment of the disclosure, the operating method may further include, after measuring the first distance, identifying whether the second condition is satisfied.

According to an embodiment of the disclosure, the operating method may further include, based on identifying that the second condition is satisfied, measuring the first distance.

According to an embodiment, a non-transitory computer-readable storage medium may include one or more programs including instructions, when executed by at least one processor of an electronic device, configured to cause the electronic device to measure a first distance between the electronic device and a first external electronic device and a second distance between the electronic device and a second external electronic device (210).

According to an embodiment of the disclosure, the instructions may be further configured to cause the electronic device to, based on the first distance and the second distance, identify whether a first condition that the first external electronic device and the second external electronic device exist in a designated area is satisfied.

According to an embodiment of the disclosure, the instructions may be further configured to cause the electronic device to, based on identifying that the first condition is satisfied, identify whether a function of the electronic device corresponding to the first condition is registered.

According to an embodiment of the disclosure, the instructions may be further configured to cause the electronic device to, based on identifying that the function of the electronic device corresponding to the first condition is registered, perform the function of the electronic device corresponding to the first condition.

According to an embodiment of the disclosure, the first distance may be measured if a second condition that triggers distance measurement between the electronic device and the first external electronic device is satisfied by the first external electronic device.

According to an embodiment of the disclosure, the second distance may be measured if a third condition that triggers distance measurement between the electronic device and the second external electronic device is satisfied by the second external electronic device.

According to an embodiment, a non-transitory computer-readable storage medium may include one or more programs including instructions, when executed by at least one processor of an electronic device, configured to cause the electronic device to register, with a second external electronic device, a first condition that the electronic device and a first external electronic device exist in a designated area, and a function of the second external electronic device corresponding to the first condition.

According to an embodiment of the disclosure, the instructions may be further configured to cause the electronic device to identify whether a second condition which triggers distance measurement between the electronic device and the second external electronic device is satisfied.

According to an embodiment of the disclosure, the instructions may be further configured to cause the electronic device to, based on identifying that the second condition is satisfied, measure a first distance between the electronic device and the second external electronic device.

According to an embodiment of the disclosure, the instructions may be further configured to cause the electronic device to, after measuring the first distance, identify whether the second condition is satisfied.

According to an embodiment of the disclosure, the instructions may be further configured to cause the electronic device to, based on identifying that the second condition is satisfied, measure the first distance.

[Brief Description of the Drawings]

FIG. 1 is a block diagram schematically illustrating an electronic device within a network environment according to an embodiment.
FIG. 2 is a diagram illustrating a process for providing a location-based service in a network environment according to an embodiment.
FIG. 3 is a block diagram illustrating an internal structure of an electronic device according to an embodiment.
FIG. 4 is a block diagram illustrating an internal structure of a first external electronic device according to an embodiment.

# EP 4 564 855 A1

FIG. 5 is a block diagram illustrating an internal structure of a second external electronic device according to an embodiment.

FIG. 6 is a block diagram illustrating an internal structure of a third external electronic device according to an embodiment.

FIG. 7 is a diagram illustrating a UWB ranging process in a wireless communication network according to an embodiment.

FIG. 8 is a flowchart illustrating an operating process of a second external electronic device in a wireless communication network according to an embodiment.

FIG. 9a is a flowchart illustrating an operating process of a second external electronic device in a wireless communication network according to an embodiment.

FIG. 9b is a flowchart illustrating an operating process of a second external electronic device in a wireless communication network according to an embodiment.

FIG. 10 is a flowchart illustrating an operating process of an electronic device in a wireless communication network according to an embodiment.

FIG. 11 is a flowchart illustrating an operating process of a first external electronic device in a wireless communication network according to an embodiment.

FIG. 12a is a signal flow diagram illustrating an operating process of an electronic device, a first external electronic device, and a second external electronic device according to a location-based service in a wireless communication network according to an embodiment.

FIG. 12b is a signal flow diagram illustrating an operating process of an electronic device, a first external electronic device, and a second external electronic device according to a location-based service in a wireless communication network according to an embodiment.

FIG. 13 is a diagram illustrating an operating process of an electronic device, a first external electronic device, and a second external electronic device according to a location-based service in a wireless communication network according to an embodiment.

FIG. 14 is a diagram illustrating an operating process of an electronic device, a first external electronic device, and a second external electronic device according to a location-based service in a wireless communication network according to an embodiment.

[Mode for Carrying out the Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe specific embodiments, and are not intended to limit an embodiment of the disclosure. Alternatively, the technical terms used herein should be interpreted to have the same meaning as those commonly understood by a person skilled in the art to which the disclosure pertains, and should not be interpreted to have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, in a detailed description of an embodiment of the disclosure, a Bluetooth standard specified by Bluetooth special interest group (SIG), an ultra-wideband (UWB) standard which may be specified by Institute of Electrical and Electronics Engineers (IEEE) 802.15.4/4z, or a FiRa standard which may be specified by a FiRa Consortium which is a consortium based on the UWB standard are referred to, but the main subject of the disclosure can be somewhat modified and applied to a communication system, which uses other standards, having a similar technical background without departing from the scope of the disclosure, and the modifications can be made on the basis of determination of those skilled in the art.

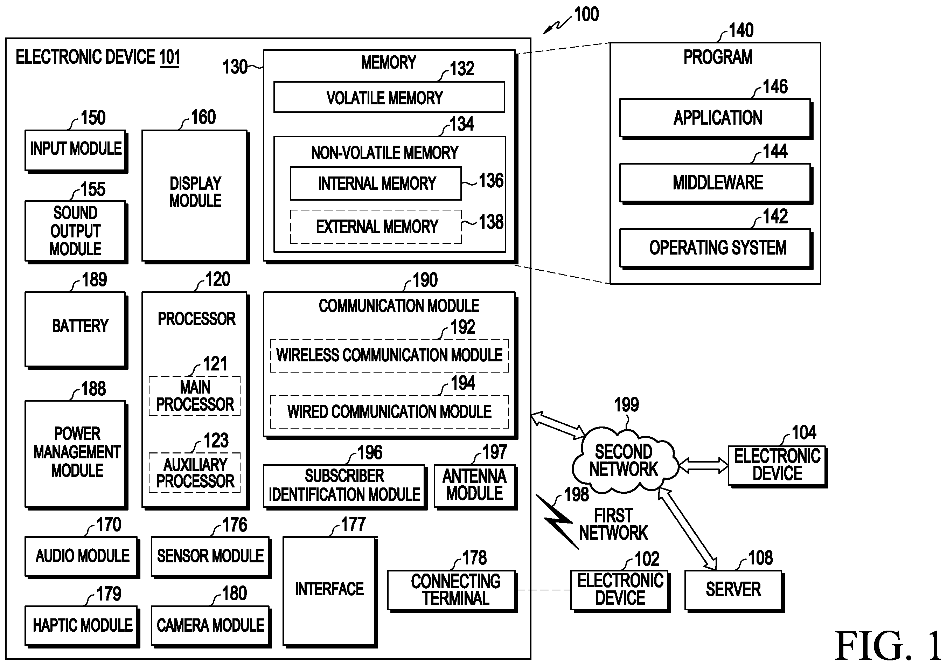

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto.

The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

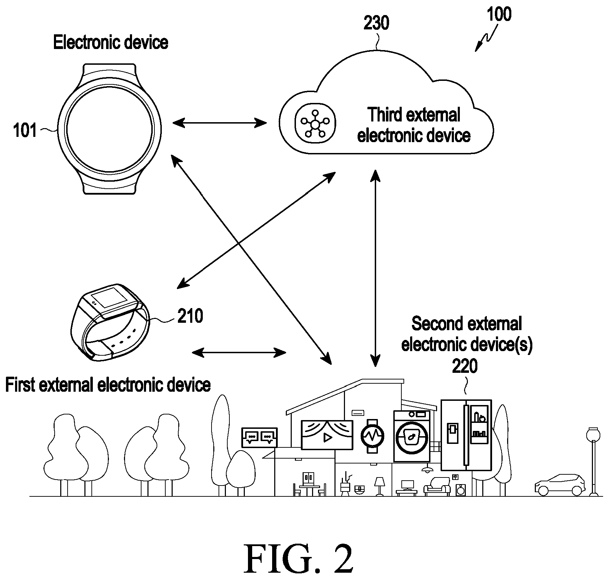

FIG. 2 is a diagram illustrating a process for providing a location-based service in a network environment 100 according to an embodiment.

Referring to FIG. 2, the network environment 100 may be an IoT network environment (e.g., a smart home network environment). According to an embodiment, an electronic device 101 (e.g., an electronic device 101 in FIG. 1) may be a wearable electronic device (e.g., a smart watch). In the disclosure, the electronic device 101 is described as an example of the wearable electronic device which may be worn on a user (e.g., on the user's body), but the electronic device 101 may also be an electronic device which is not wearable on the user. According to an embodiment, the electronic device 101 may be an electronic device which may provide a location-based service (e.g., an IoT service). For example, the location-based service may be an automation service which is one of various services provided in a smart home service. According to an embodiment, the electronic device 101 may include a sensor module (e.g., a sensor module 176 in FIG. 1) including at least one sensor, and may obtain various information via the sensor module.

The electronic device 101 may provide the automation service based on movement information and health information. The electronic device 101 may provide the automation service based on a trigger condition based on the movement information and the health information. The trigger condition will be described in more detail below, so a detailed description thereof will be omitted herein.

In an embodiment, the movement information may be information related to the movement of the electronic device 101, and may include a moving speed of the electronic device 101, a moving direction of the electronic device 101, and/or a moving distance of the electronic device 101. In an embodiment, the electronic device 101 may obtain sensed values via a gyro sensor, an acceleration sensor, and/or an angular velocity sensor included in the sensor module, and may obtain the moving speed of the electronic device 101, the moving direction of the electronic device 101, and/or the moving distance of the electronic device 101 based on the sensed values obtained via the gyro sensor, the acceleration sensor, and/or the angular velocity sensor. The movement information may not be limited to the moving speed, the moving direction, and/or the moving distance.

In an embodiment, the health information may include biometric information of a user of the electronic device 101, a personal profile of the user of the electronic device 101, and/or exercise information of the user of the electronic device 101.

In an embodiment, the biometric information may include a body temperature, a heart rate (HR), a blood pressure, a body pressure, stress information (e.g., a stress index), information about a sleep state, saturation of percutaneous oxygen (SpO2), and/or atrial fibrillation information. The biometric information may be obtained via the sensor module or a separate biometric information measuring device, and may not be limited to the body temperature, the HR, the blood pressure, the body pressure, the stress information, the information about the sleep state, the SpO2, and/or the atrial fibrillation information.

In an embodiment, the personal profile may include age and/or gender, but may not be limited to the age and/or the gender.

In an embodiment, the exercise information may include exercise state information indicating that the user of the electronic device 101 is in an exercise state, and/or an exercise type. In an embodiment, the exercise state may be identified based on sensed values obtained via a gyro sensor, an acceleration sensor, and/or a heart rate measurement sensor. For example, the electronic device 101 may obtain the sensed values via the gyro sensor, the acceleration sensor, and/or the heart rate measurement sensor at a set cycle (e.g., 1 minute), and may identify a user state as the exercise state if each of the sensed values obtained via the gyro sensor, the acceleration sensor, and/or the heart rate measurement sensor is greater than or equal to a set threshold value. In an embodiment, the exercise type may indicate a type of exercise that the user of the electronic device 101 is doing.

According to an embodiment, a first external electronic device 210 (e.g., an electronic device 104 in FIG. 1) may be a wearable electronic device (e.g., a smart watch). The first external electronic device 210 may be an electronic device which may provide a location-based service by interworking with the electronic device 101. In the disclosure, the first external electronic device 210 is described as an example of a wearable electronic device which may be worn on a user (e.g., on the user's body), but the first external electronic device 210 may also be an electronic device which is not wearable on the user. According to an embodiment, the user of the first external electronic device 210 may be different from the user of the electronic device 101.

According to an embodiment, the first external electronic device 210 may include a sensor module including at least one sensor, and may obtain various information via the sensor module. The first external electronic device 210 may provide an automation service based on movement information and health information. The first external electronic device 210 may provide the automation service based on a trigger condition based on the movement information and the health information. The movement information and the health information may be implemented to be similar to or substantially the same as the movement information and the health information used in the electronic device 101, so a detailed description thereof will be omitted herein.

According to an embodiment, a second external electronic device(s) 220 (e.g., an electronic device 102 in FIG. 1) may be a device which provides a location-based service by interworking with the electronic device 101, the first external electronic device 210, and/or a third external electronic device 230. In an embodiment, the third external electronic device 230 may be another electronic device or a server (e.g., a server 108 in FIG. 1). If the third external electronic device 230 is implemented as the server, the electronic device 101 and/or the first external electronic device 210 may be connected to the third external electronic device 230 via the other electronic device. According to an embodiment, the second external electronic device(s) 220 may be an IoT device (e.g., a home appliance such as a television (TV), a light, an air conditioner, a blind, an air purifier, a camera, an oven, and/or a speaker). According to an embodiment, the second external electronic device(s) 220 may be located in a home space. In an embodiment, other external electronic devices (e.g., a cloud server, and/or an application market server) may exist in the network environment 100.

According to an embodiment, the third external electronic device 230 (e.g., the server 108 in FIG. 1) may be a server (e.g., an IoT service server) or a hub. In an embodiment, the hub may be located in a home space.

In an embodiment, the electronic device 101 may obtain (or measure) a location of the second external electronic device(s) 220 and a direction toward which the second external electronic device(s) 220 directs based on at least one of a Bluetooth (BT) scheme, a Bluetooth low energy (BLE) scheme, an ultra-wideband (UWB) scheme, or a global positioning system (GPS) scheme. In an embodiment, the electronic device 101 may obtain the direction toward which the second external electronic device(s) 220 directs based on the UWB scheme. In an embodiment, the electronic device 101 may obtain a distance between the electronic device 101 and the second external electronic device(s) 220 based on at least one of the Bluetooth scheme, the BLE scheme, or the UWB scheme. A scheme used for obtaining the location of the second external electronic device(s) 220, the direction toward which the second external electronic device(s) 220 directs, or the distance between the electronic device 101 and the second external electronic device(s) 220 is not limited to the Bluetooth scheme, the BLE scheme, the UWB scheme, or the GPS scheme.

In an embodiment, the first external electronic device 210 may obtain (or measure) a location of the second external electronic device(s) 220 and a direction toward which the second external electronic device(s) 220 directs based on at least one of the BT scheme, the BLE scheme, the UWB scheme, or the GPS scheme. In an embodiment, the first external electronic device 210 may obtain the direction toward which the second external electronic device(s) 220 directs based on the UWB scheme. In an embodiment, the first external electronic device 210 may obtain a distance between the first external electronic device 210 and the second external electronic device(s) 220 based on at least one of the Bluetooth scheme, the BLE scheme, or the UWB scheme. A scheme used for obtaining the location of the second external electronic device(s) 220, the direction toward which the second external electronic device(s) 220 directs, or the distance between the first external electronic device 210 and the second external electronic device(s) 220 is not limited to the Bluetooth scheme, the BLE scheme, the UWB scheme, or the GPS scheme.

In an embodiment, the second external electronic device(s) 220 may be located in various spaces within the network environment 100 (e.g., a living room, a family room, a kitchen, an entrance, and a laundry storage within a home space, and a first office to an Nth office, a kitchen, and/or an entrance within an office space), and may communicate with the electronic device 101 or the first external electronic device 210 via the third external electronic device 230.

According to an embodiment, the second external electronic device(s) 220 may include at least one of various types of electronic devices which operate based on the IoT service. In an embodiment, the second external electronic device(s) 220 may include a sensor for sensing a surrounding environment or a switch. If the second external electronic device(s) 220 is not able to perform a direct communication, the second external electronic device(s) 220 may communicate with the electronic device 101 via another external electronic device connected to the electronic device 101. If the second external electronic device(s) is not able to perform the direct communication, the second external electronic device(s) 220 may communicate with the first external electronic device 210 via another external electronic device connected to the first external electronic device 210.

The second external electronic device(s) 220 may include all electronic devices which may communicate with the electronic device 101. If the second external electronic device(s) 220 includes a plurality of electronic devices, the electronic device 101 may perform an 1:N communication with the second external electronic device(s) 220. The second external electronic device(s) 220 may include all electronic devices which may communicate with the first external electronic device 210. If the second external electronic device(s) 220 includes a plurality of electronic devices, the first external electronic device 210 may perform an 1:N communication with the second external electronic device(s) 220.

In an embodiment, the second external electronic device(s) 220 may obtain (or measure) a location of the electronic device 101 and a direction toward which the electronic device 101 directs based on at least one of the BT scheme, the BLE scheme, the UWB scheme, or the GPS scheme. In an embodiment, the second external electronic device(s) 220 may obtain the direction toward which the electronic device 101 directs based on the UWB scheme. In an embodiment, the second external electronic device(s) 220 may obtain a distance between the second external electronic device(s) 220 and the electronic device 101 based on at least one of the Bluetooth scheme, the BLE scheme, or the UWB scheme. A scheme used for obtaining the location of the electronic device 101, the direction toward which the electronic device 101 directs, or the distance between the second external electronic device(s) 220 and the electronic device 101 is not limited to the Bluetooth scheme, the BLE scheme, the UWB scheme, or the GPS scheme.

In an embodiment, the second external electronic device(s) 220 may obtain (or measure) a location of the first external electronic device 210 and a direction toward which the electronic device 101 directs based on at least one of the BT scheme, the BLE scheme, the UWB scheme, or the GPS scheme. In an embodiment, the second external electronic device(s) 220 may obtain the direction toward which the first external electronic device 210 directs based on the UWB scheme. In an embodiment, the second external electronic device(s) 220 may obtain a distance between the second external electronic device(s) 220 and the first external electronic device 210 based on at least one of the Bluetooth scheme, the BLE scheme, or the UWB scheme. A scheme used for obtaining the location of the first external electronic device 210, the direction toward which the first external electronic device 210 directs, or the distance between the second external electronic device(s) 220 and the first external electronic device 210 is not limited to the Bluetooth scheme, the BLE scheme, the UWB scheme, or the GPS scheme.

According to an embodiment, the second external electronic device(s) 220 may operate based on a user input or may operate automatically if a set condition is satisfied.

Hereinafter, the "set condition" may refer to a condition set so that a function is performed if the condition is satisfied. For example, a set condition for the second external electronic device(s) 220 may be a set condition which causes the second external electronic device(s) 220 to perform a corresponding function if the condition is satisfied.

The set condition will be described below, so a detailed description thereof will be omitted herein. If the set condition is satisfied, the second external electronic device(s) 220 may transmit data (or a signal) to the third external electronic device 230 in response to the set condition being satisfied. For example, the data in response to the set condition being satisfied may include a device identifier (ID) of the second external electronic device(s) 220, and the device ID may be set at a time point at which the second external electronic device(s) 220 is manufactured.

According to an embodiment, the third external electronic device 230 may receive data from the second external electronic device(s) 220. According to an embodiment, the third external electronic device 230 may communicate with the second external electronic device(s) 220, the electronic device 101, and the first external electronic device 210 based on a first communication scheme and/or a second communication scheme. According to an embodiment, the third external electronic device 230 may communicate with the second external electronic device(s) 220 based on the first communication scheme, and communicate with the electronic device 101 and/or the first external electronic device 210 based on the second communication scheme.

In an embodiment, the first communication scheme may be different from or the same as the second communication scheme. If the first communication scheme is different from the second communication scheme, the first communication scheme may be a communication scheme which consumes relatively less power than the second communication scheme. For example, a Zigbee scheme may be used for a communication between the second external electronic device(s) 220 and the third external electronic device 230, and a Wi-Fi scheme may be used for a communication between the electronic device 101 and/or the first external electronic device 210 and the third external electronic device 230.

According to an embodiment, the third external electronic device 230 may communicate with at least some of the second external electronic device(s) 220 based on a third communication scheme. For example, the Zigbee scheme may be used for a communication between the at least some of the second external electronic device(s) 220 and the third external electronic device 230, and a Z-Wave scheme may also be used for a communication between other some of the second external electronic device(s) 220 and the third external electronic device 230. For example, the second external electronic device(s) 220 communicating based on the Zigbee scheme may communicate with the third external electronic device 230 with relatively low power, and the second external electronic device(s) 220 communicating based on the Z-Wave scheme may obtain higher power efficiency than the second external electronic device(s) 220 communicating based on the Zigbee scheme.

For example, the third external electronic device 230 may collect data received from each of the second external electronic device(s) 220 existing in the network environment 100 based on a Zigbee communication or a Z-Wave communication, and may transmit the collected data to the electronic device 101 and/or the first external electronic device 210 or another external electronic device (e.g., a hub).

According to an embodiment, the third external electronic device 230 may communicate with the second external electronic device(s) 220, the electronic device 101, and the first external electronic device 210 based on an LTE scheme, the Bluetooth scheme, the BLE scheme, the UWB scheme, the Zigbee scheme, the Z-Wave scheme, and/or the Wi-Fi scheme.

According to an embodiment, the electronic device 101 may receive data from the second external electronic device(s) 220 and display a screen corresponding to the received data. According to an embodiment, as an IoT-based application (e.g., Samsung™ SmartThings application) for controlling the second external electronic device(s) 220 disposed in one of various spaces within the network environment 100 is executed, the electronic device 101 may output a user interface (UI) related to the executed IoT-based application. The IoT-based application may be an application for providing the location-based service.

In an embodiment, the electronic device 101 may receive a signal including information about the second external electronic device(s) 210 from the third external electronic device 230. The electronic device 101 may obtain the information about the second external electronic device(s) 210 from the signal received from the third external electronic device 230. In an embodiment, the second external electronic device(s) 210 may be registered with the third external electronic device 230 using the same account (e.g., the same user account) as the first external electronic device 210 and the electronic device 101. In an embodiment, the information about the second external electronic device(s) 210 may include a device ID of each of the second external electronic device(s) 210 and/or information related to a capability supported in the second external electronic device(s) 210. The electronic device 101 may store and manage the obtained information about the second external electronic device(s) 210 in a form of a database.

In an embodiment, while the information about the second external electronic device(s) 220 is stored, the electronic device 101 may set a location-based service which causes the second external electronic device(s) 220 to perform an operation corresponding to a set condition if the set condition is satisfied. In an embodiment, the location-based service may provide a function which causes the second external electronic device(s) 220 to perform the function corresponding to the set condition if the set condition is satisfied.

In an embodiment, the set condition may include a condition that a distance between the electronic device 101 and the second external electronic device(s) 220 is shorter than or equal to a threshold distance. The electronic device 101 may set a function to be performed by the second external electronic device(s) 220 if the distance between the electronic device 101 and the second external electronic device(s) 220 is shorter than or equal to the threshold distance. If the distance between the electronic device 101 and the second external electronic device(s) 220 is shorter than or equal to the threshold distance, the set condition may be satisfied, and accordingly, the second external electronic device(s) 220 may perform the function corresponding to the set condition.

For example, if the second external electronic device(s) 220 is an air conditioner, the set condition includes a condition that the distance between the electronic device 101 and the second external electronic device(s) 220 is shorter than or equal to the threshold distance (e.g., 200 cm), and a function of the second external electronic device(s) 220 performed if the set condition is satisfied may include a cooling function set to 24 degrees.

For another example, if the second external electronic device(s) 220 is a TV, the set condition includes a condition that the distance between the electronic device 101 and the second external electronic device(s) 220 is shorter than or equal to the threshold distance (e.g., 100 cm), and the function of the second external electronic device(s) 220 performed if the set condition is satisfied may include a function of providing all broadcast channels.

According to an embodiment, the first external electronic device 210 may receive data from the second external electronic device(s) 220 and output a screen corresponding to the received data. According to an embodiment, as an IoT-based application (e.g., Samsung™ SmartThings application) for controlling the second external electronic device(s) 220 disposed in one of various spaces within the network environment 100 is executed, the first external electronic device 210 may output a UI related to the executed IoT-based application. The IoT-based application may be an application for providing the location-based service.

In an embodiment, the first external electronic device 210 may receive a signal including information about the second external electronic device(s) 210 from the third external electronic device 230. The first external electronic device 210 may obtain the information about the second external electronic device(s) 210 from the signal received from the third external electronic device 230. The first external electronic device 210 may store and manage the obtained information about the second external electronic device(s) 210 in a form of a database.

In an embodiment, while the information about the second external electronic device(s) 220 is stored, the first external electronic device 210 may set a location-based service which causes the second external electronic device(s) 220 to perform an operation corresponding to a set condition if the set condition is satisfied. In an embodiment, the location-based service may provide a function which causes the second external electronic device(s) 220 to perform the function corresponding to the set condition if the set condition is satisfied.

In an embodiment, the set condition may include a condition that a distance between the first external electronic device 210 and the second external electronic device(s) 220 is shorter than or equal to a threshold distance. The first external electronic device 210 may set a function to be performed by the second external electronic device(s) 220 if the distance between the first external electronic device 210 and the second external electronic device(s) 220 is shorter than or equal to the threshold distance. If the distance between the first external electronic device 210 and the second external electronic device(s) 220 is shorter than or equal to the threshold distance, the set condition may be satisfied, and accordingly, the second external electronic device(s) 220 may perform the function corresponding to the set condition.

For example, if the second external electronic device(s) 220 is an air conditioner, the set condition includes a condition that the distance between the first external electronic device 210 and the second external electronic device(s) 220 is shorter than or equal to the threshold distance (e.g., 200 cm), and a function of the second external electronic device(s) 220 performed if the set condition is satisfied may include a cooling function set to 18 degrees.

For another example, if the second external electronic device(s) 220 is a TV, the set condition includes a condition that the distance between the first external electronic device 210 and the second external electronic device(s) 220 is shorter than or equal to the threshold distance (e.g., 100 cm), and the function of the second external electronic device(s) 220 performed if the set condition is satisfied may include a function of providing limited broadcast channels.

In an embodiment, the set condition may include a condition that the distance between the first external electronic device 210 and the second external electronic device(s) 220 is longer than the threshold distance. The first external electronic device 210 may cause the second external electronic device(s) 220 not to perform the function if the distance between the first external electronic device 210 and the second external electronic device(s) 220 is longer than the threshold distance. If the distance between the first external electronic device 210 and the second external electronic device(s) 220 is longer than the threshold distance, the set condition may be satisfied, and accordingly, the second external electronic device(s) 220 may not perform the function corresponding to the set condition. In an embodiment, the set condition may include a condition that the distance between the first external electronic device 210 and the second external electronic device(s) 220 exists within a threshold range. The first external electronic device 210 may set a function to be performed by the second external electronic device(s) 220 if the distance between the first external electronic device 210 and the second external electronic device(s) 220 exists within the threshold range. If the distance between the first external electronic device 210 and the second external electronic device(s) 220 exists within the threshold range, the set condition may be satisfied, and accordingly, the second external electronic device(s) 220 may perform the function corresponding to the set condition.

In FIG. 2, an example is described in which the set condition is set based on the distance between the first external electronic device 210 and the second external electronic device(s) 220, but the set condition may not be limited to the distance between the first external electronic device 210 and the second external electronic device(s) 220.

According to an embodiment, a multi-user automation function may be provided which may control the second external electronic device(s) 220 considering a plurality of users.

In a single-user automation function provided in an existing automation service, the automation function may be performed for each user. For example, when a set condition of the electronic device 101 is satisfied, the second external electronic device(s) 220 may perform a condition corresponding to the set condition of the electronic device 101. While the second external electronic device(s) 220 is performing the function corresponding to the set condition of the electronic device 101, even if a set condition of the first external electronic device 210 is satisfied, the second external electronic device(s) 220 may not perform a function corresponding to the set condition of the first external electronic device 210 because the second external electronic device(s) 220 is already performing the function corresponding to the set condition of the electronic device 101. Alternatively, if the set condition of the first external electronic device 210 is satisfied while the second external electronic device(s) 220 is performing the function corresponding to the set condition of the electronic device 101, the second external electronic device(s) 220 may stop the function corresponding to the set condition of the electronic device 101 which is already being performed and perform an operation corresponding to the set condition of the first external electronic device 210.

As described above, because the single-user automation function currently provided by the automation service provides the automation function by considering only one user, if a plurality of users exists in a designated area (e.g., the same space), it may be impossible to control a function of the second external electronic device(s) 220 by considering the plurality of users.

If a multi-user automation function according to an embodiment is provided, the second external electronic device(s) 220 may perform a function corresponding to a set condition that both the electronic device 101 and the first external electronic device 210 are considered if the set condition that both the electronic device 101 and the first external electronic device 210 are considered is satisfied. If the multi-user automation function according to an embodiment is provided, even if the second external electronic device(s) 220 is performing a function corresponding to the set condition of the electronic device 101 or the second external electronic device(s) 220 is performing a function corresponding to the set condition of the first external electronic device 210, the second external electronic device(s) 220 may perform the function corresponding to the set condition that both the electronic device 101 and the first external electronic device 210 are considered if the set condition that both the electronic device 101 and the first external electronic device 210 are considered is satisfied. Hereinafter, for the convenience of explanation, a condition which considers only one electronic device (or one user) will be referred to as a "single-user condition", and a condition which considers a plurality of electronic devices (or a plurality of users) will be referred to as a "multi-user condition."

In an embodiment, the single-user condition may be set in a corresponding electronic device, and the corresponding electronic device may also set a function of the second external electronic device(s) 220 to be performed if the single-user condition is satisfied.

In an embodiment, the multi-user condition may be set in at least one of corresponding electronic devices, and at least one of the corresponding electronic devices may also set a function of the second external electronic device(s) 220 to be performed if the multi-user condition is satisfied.

In an embodiment, if a multi-user automation function for the electronic device 101 and the first external electronic device 210 is provided, a multi-user condition may be set by the electronic device 101.

For example, if the second external electronic device(s) 220 is an air conditioner, the multi-user condition includes a condition that the distance between the electronic device 101 and the second external electronic device(s) 220 is shorter than or equal to the threshold distance (e.g., 200 cm), and the distance between the first external electronic device 210 and the second external electronic device(s) 220 is shorter than or equal to the threshold distance (e.g., 200 cm), and a function of the second external electronic device(s) 220 performed if the multi-user condition is satisfied may include a cooling function set to 22 degrees.

For another example, if the second external electronic device(s) 220 is a TV, the multi-user condition includes a condition that the distance between the electronic device 101 and the second external electronic device(s) 220 is shorter than or equal to the threshold distance (e.g., 100 cm), and the distance between the first external electronic device 210 and the second external electronic device(s) 220 is shorter than or equal to the threshold distance (e.g., 100 cm), and the function of the second external electronic device(s) 220 performed if the multi-user condition is satisfied may include a function of providing limited broadcast channels.

In an embodiment, if the multi-user automation function for the electronic device 101 and the first external electronic device 210 is provided, the multi-user condition may be set by the first external electronic device 210. An operation in a case that the multi-user condition is set by the first external electronic device 210 may be implemented to be similar to or substantially the same as an operation in a case that the multi-user condition is set by the electronic device 101, so a detailed description thereof will be omitted herein.

In an embodiment, the multi-user condition may be set in the second external electronic device(s) 220, and the second external electronic device(s) 220 may also set a function of the second external electronic device(s) 220 to be performed if the multi-user condition is satisfied.

In an embodiment, if the multi-user automation function for the electronic device 101 and the first external electronic device 210 is provided, the multi-user condition may be set by the second external electronic device(s) 220.

For example, if the second external electronic device(s) 220 is an air conditioner, the multi-user condition includes a condition that the distance between the electronic device 101 and the second external electronic device(s) 220 is shorter than or equal to the threshold distance (e.g., 200 cm), and the distance between the first external electronic device 210 and the second external electronic device(s) 220 is shorter than or equal to the threshold distance (e.g., 200 cm), and a function of the second external electronic device(s) 220 performed if the multi-user condition is satisfied may include a cooling function set to 22 degrees.

For another example, if the second external electronic device(s) 220 is a TV, the multi-user condition includes a condition that the distance between the electronic device 101 and the second external electronic device(s) 220 is shorter than or equal to the threshold distance (e.g., 100 cm), and the distance between the first external electronic device 210 and the second external electronic device(s) 220 is shorter than or equal to the threshold distance (e.g., 100 cm), and the function of the second external electronic device(s) 220 performed if the multi-user condition is satisfied may include a function of providing limited broadcast channels.

In an embodiment, if the multi-user automation function for the electronic device 101 and the first external electronic device 210 is provided, the multi-user condition may be preset by at least one of the electronic device 101, the first external electronic device 210, or the second external electronic device(s) 220, but the function of the second external electronic device(s) 220 to be performed if the multi-user condition is satisfied may not be preset.

If the function of the second external electronic device(s) 220 to be performed if the multi-user condition is satisfied is not preset, the second external electronic device(s) 220 may output information indicating that the multi-user condition is satisfied. In an embodiment, the information indicating that the multi-user condition is satisfied may be outputted in a form of a message (e.g., a text message or a voice message).

As the information indicating that the multi-user condition is satisfied is outputted, the second external electronic device(s) 220 may obtain a user input indicating the function corresponding to the multi-user condition. As the information indicating that the multi-user condition is satisfied is outputted, the second external electronic device(s) 220 may receive a user input indicating the function of the second external electronic device(s) 220 to be performed if the multi-user condition is satisfied from at least one of the electronic device 101 or the first external electronic device 210.

In an embodiment, the multi-user condition may be a condition based on a distance between each of corresponding electronic devices (e.g., the electronic device 101 and the first external electronic device 210) and the second external electronic device(s) 220. Because a UWB technology is a wireless communication technology which enables accurate location estimation based on an ultra-wideband, if a distance measurement operation based on the UWB technology is performed, the distance between each of the corresponding electronic devices and the second external electronic device(s) 220 may be accurately measured. Although the UWB technology enables the accurate location estimation based on the ultra-wideband, current consumption is relatively large compared to operation time, so if the electronic device 101 and the first external electronic device 210 continuously perform the distance measurement operation based on the UWB technology to provide the multi-user automation function, it may result in relatively large battery current consumption.

According to an embodiment, if the multi-user automation function is provided, each of the electronic device 101 and the first external electronic device 210 may perform the distance measurement operation based on the UWB technology only if a trigger condition is satisfied.

In an embodiment, the trigger condition may be a condition which triggers distance measurement based on the UWB technology, and may be based at least on motion information and/or health information.

According to an embodiment, the trigger condition may include at least one of the following conditions.

(1) Condition that amount of change in movement is greater than or equal to threshold amount of change

In an embodiment, the movement information is information related to movement of a corresponding electronic device, and may include a moving speed of the corresponding electronic device, a moving direction of the corresponding electronic device, and/or a moving distance of the corresponding electronic device. **In** an embodiment, the corresponding electronic device may obtain sensed values via a gyro sensor, an acceleration sensor, and/or an angular velocity sensor included in a sensor module, and may obtain the moving speed, the moving direction, and/or the moving distance of the corresponding electronic device based on the sensed values obtained via the gyro sensor, the acceleration sensor, and/or the angular velocity sensor.

The condition that the amount of change in the movement is greater than or equal to the threshold amount of change may include a condition that the moving speed is higher than or equal to a threshold speed during set time, and/or a condition that the moving distance is longer than or equal to a threshold distance during the set time. **In** an embodiment, the movement may be identified based on at least one of an acceleration signal or an angular velocity signal. For example, if the movement is identified based on acceleration, amount of change in the movement may be greater than or equal to the threshold amount of change if amount of change in a direct current (DC) value of an acceleration signal of the corresponding electronic device during the set time is greater than or equal to the threshold amount of change. As another example, if the movement is identified based on angular velocity, the amount of change in the movement may be greater than or equal to the threshold amount of change if amount of change in a DC value of an angular velocity signal of the corresponding electronic device during the set time is greater than or equal to the threshold amount of change.

(2) Condition that a distance moved from a location at which a distance measurement operation based on a UWB technology was last performed is longer than or equal to a threshold distance
(3) Condition that a corresponding electronic device has a history of moving away from an opposite electronic device with which the corresponding electronic device performed a distance measurement operation based on a UWB technology

The condition that the corresponding electronic device has the history of moving away from the opposite electronic device with which the corresponding electronic device performed the distance measurement operation based on the UWB technology may be a condition that a distance between the electronic device and the opposite electronic device tends to increase.
(4) Condition that time during which a corresponding electronic device stays in an area (e.g., space) at which a distance measurement operation based on a UWB technology was last performed is shorter than threshold time

A case that the time during which the corresponding electronic device stays in the area at which the distance measurement operation based on the UWB technology was last performed is shorter than the threshold time may mean a case than the corresponding electronic device is simply moving through the area.
(5) Condition that a condition based on health information is satisfied

The health information may include biometric information of a user of a corresponding electronic device, a personal profile of the user of the corresponding electronic device, and/or exercise information of the user of the corresponding electronic device. In an embodiment, the health information may include a body temperature, an HR, a blood pressure, a body pressure, stress information, information about a sleep state, SpO2, and/or atrial fibrillation information. In an embodiment, the personal profile may include age and/or gender. In an embodiment, the exercise information may include exercise state information indicating that the user of the corresponding electronic device is in an exercise state, and/or an exercise type. In an embodiment, the condition based on the health information may be a condition that the user is not in the exercise state.
(6) Condition that time elapsed from time at which a distance measurement operation based on a UWB technology was last performed is longer than or equal to threshold time

Although the UWB technology enables accurate location estimation based on an ultra-wideband, because current consumption is relatively large compared to operating time, the distance measurement operation based on the UWB technology may be performed only if the time elapsed from the time at which the distance measurement operation based on the UWB technology was last performed is longer than or equal to the threshold time. For example, a corresponding electronic device may prevent unnecessary and frequent distance measurement operations by performing the distance measurement operation based on the UWB technology after the threshold time elapses from the time at which the distance measurement operation based on the UWB technology was last performed.

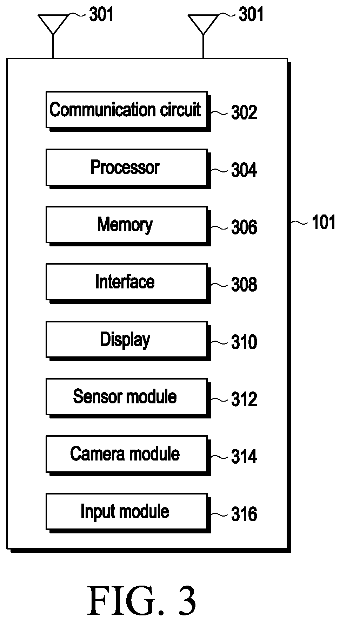

FIG. 3 is a block diagram illustrating an internal structure of an electronic device 101 according to an embodiment.

Referring to FIG. 3, the electronic device 101 (e.g., an electronic device 101 in FIG. 1 or 2) may be an electronic device which implements an IoT service in a network environment (e.g., an IoT network environment). For example, an IoT network may be a smart home network, and the IoT service may be an automation service which is a location-based service.

The electronic device 101 (e.g., a wearable electronic device) may include antennas 301, a communication circuit 302, a processor 304, memory 306, an interface 308, a display 310, a sensor module 312, a camera module 314, and/or an input module 316.

Referring to FIG. 3, the electronic device 101 may be a device supporting a long term evolution (LTE) scheme, a Zigbee scheme, a Z-Wave scheme, a Wi-Fi scheme, a BLE scheme, a UWB scheme, and/or a GPS scheme. The electronic device 101 may include a communication circuit 302 (e.g., a communication module 190 in FIG. 1) for transmitting and receiving signals to and from a first external electronic device (e.g., an electronic device 104 in FIG. 1 or a first external electronic device 210 in FIG, 2), a second external electronic device (e.g., an electronic device 102 in FIG. 1 or a second external electronic device(s) 220 in FIG, 2), and/or a third external electronic device (e.g., a server 108 in FIG. 1 or a third external electronic device 230 in FIG. 2) using one or more antennas 301. In an embodiment, the one or more antennas 301 may be implemented as a part of an antenna module 198 in FIG. 1.

According to an embodiment, the communication circuit 302 may include a plurality of communication circuits, and the plurality of communication circuits may include a communication circuit which is based on the LTE scheme, the Bluetooth scheme, the BLE scheme, the UWB scheme, the Zigbee scheme, the Z-wave scheme, and/or the Wi-Fi scheme. According to an embodiment, the electronic device 101 may not include a separate communication circuit which is based on each of the LTE scheme, the Bluetooth scheme, the BLE scheme, the UWB scheme, the Zigbee scheme, the Z-Wave scheme, and/or the Wi-Fi scheme, and may include a communication circuit which is based on at least two of the LTE scheme, the Bluetooth scheme, the BLE scheme, the UWB scheme, the Zigbee scheme, the Z-Wave scheme, and/or the Wi-Fi scheme, or all of the LTE scheme, the Bluetooth scheme, the BLE scheme, the UWB scheme, the Zigbee scheme, the Z-Wave scheme, and/or the Wi-Fi scheme. According to an embodiment, the communication circuit which is based on the at least two of the LTE scheme, the Bluetooth scheme, the BLE scheme, the UWB scheme, the Zigbee scheme, the Z-Wave scheme, and/or the Wi-Fi scheme, or all of the LTE scheme, the Bluetooth scheme, the BLE scheme, the UWB scheme, the Zigbee scheme, the Z-Wave scheme, and/or the Wi-Fi scheme may be the communication circuit 302.

The electronic device 101 may include an interface 308 (e.g., an interface 177 in FIG. 1) which provides a wired and/or wireless interface for communicating with components outside a network. In an embodiment, at least a portion of the one or more antennas 301, the communication circuit 302, or the interface 308 may be implemented as at least a portion of the communication module 190 and the antenna module 198 in FIG. 1.

The electronic device 101 may include a processor 304 (e.g., a processor 120 in FIG. 1) which may be implemented with one or more single-core processors or one or more multi-core processors, and a memory 306 (e.g., a memory 130 in FIG. 1) which stores instructions for an operation of the electronic device 101.

According to an embodiment, the memory 306 may include a UI related to applications for executing a location-based service, and images, user information, documents, databases, or related data for providing the UI. According to an embodiment, if the application for executing the location-based service is executed under the control of the processor 304, a display 310 (e.g., a display module 160 in FIG. 1) may output the UI related to the executed application.

In an embodiment, the sensor module 312 (e.g., a sensor module 176 in FIG. 1) may include at least one sensor, and the at least one sensor may include an acceleration sensor, an angular velocity sensor, a gesture sensor, an atmospheric pressure sensor, a magnetic sensor, a grip sensor, a proximity sensor, a color sensor, an infrared (IR) sensor, a biometric sensor, a temperature sensor, and/or a humidity sensor.

In an embodiment, the camera module 314 (e.g., a camera module 180 in FIG. 1) may include a camera, and the input module 316 (e.g., an input module 150 in FIG. 1) may include a microphone.

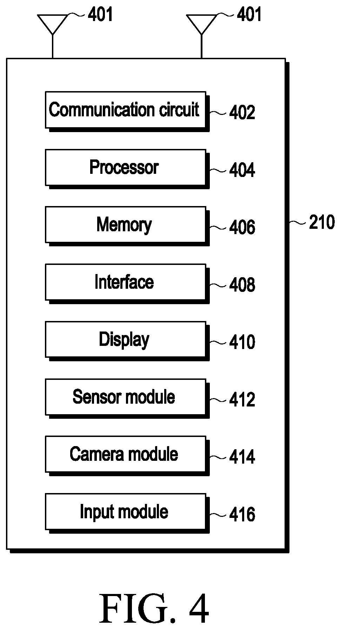

FIG. 4 is a block diagram illustrating an internal structure of a first external electronic device 210 according to an embodiment.

Referring to FIG. 4, the first external electronic device 210 (e.g., an electronic device 104 in FIG. 1 or a first external electronic device 210 in FIG. 2) may be an electronic device which implements an IoT service in a network environment (e.g., an IoT network environment). For example, an IoT network may be a smart home network, and the IoT service may be an automation service which is a location-based service.

The first external electronic device 210 (e.g., a wearable electronic device) may include antennas 401, a communication circuit 402, a processor 404, memory 406, an interface 408, a display 410, a sensor module 412, a camera module 414, and/or an input module 416.

In an embodiment, the antennas 401, the communication circuit 402, the processor 404, the memory 406, the interface 408, the display 410, the sensor module 412, the camera module 414, and/or the input module 416 may be implemented similarly to or substantially the same as antennas 301, a communication circuit 302, a processor 304, a memory 306, an interface 308, a display 310, a sensor module 312, a camera module 314, and/or an input module 316 as described in FIG. 3, respectively, so a detailed description thereof will be omitted.

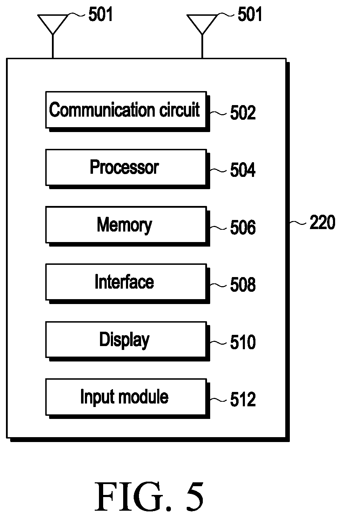

FIG. 5 is a block diagram illustrating an internal structure of a second external electronic device 220 according to an embodiment.

Referring to FIG. 5, the second external electronic device 220 (e.g., an electronic device 102 in FIG. 1 or a second external electronic device 220 in FIG. 2) may be an electronic device which implements an IoT service in a network environment (e.g., an IoT network environment). For example, an IoT network may be a smart home network, and the IoT service may be an automation service which is a location-based service.

The second external electronic device 220 (e.g., a home appliance such as a TV, a light, an air conditioner, a blind, an air purifier, a camera, an oven, and/or a speaker) may include antennas 501, a communication circuit 502, a processor 504, memory 506, an interface 508, a display 510, and/or an input module 512.

In an embodiment, the antennas 501, the communication circuit 502, the processor 504, the memory 506, the interface 508, the display 510, and/or the input module 512 may be implemented similarly to or substantially the same as antennas 301, a communication circuit 302, a processor 304, a memory 306, an interface 308, a display 310, and/or an input module 316 as described in FIG. 3, respectively, so a detailed description thereof will be omitted.

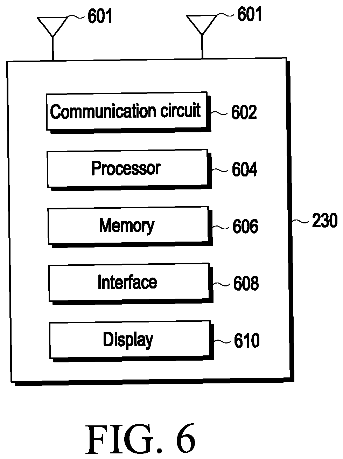

FIG. 6 is a block diagram illustrating an internal structure of a third external electronic device 230 according to an embodiment.

Referring to FIG. 6, the third external electronic device 230 (e.g., a third external electronic device 230 in FIG. 3) may be an electronic device which implements an IoT service in a network environment (e.g., an IoT network environment). For example, an IoT network may be a smart home network, and the IoT service may be an automation service which is a location-based service.

In an embodiment, the third external electronic device 230 may be another electronic device or a server (e.g., a server 108 in FIG. 1). If the third external electronic device 230 is implemented as the server, an electronic device (e.g., an electronic device 101 in FIG. 1) and/or a first external electronic device (e.g., an electronic device 104 in FIG. 1 or a first external electronic device 210 in FIG. 2) may be connected to the third external electronic device 230 via another electronic device.

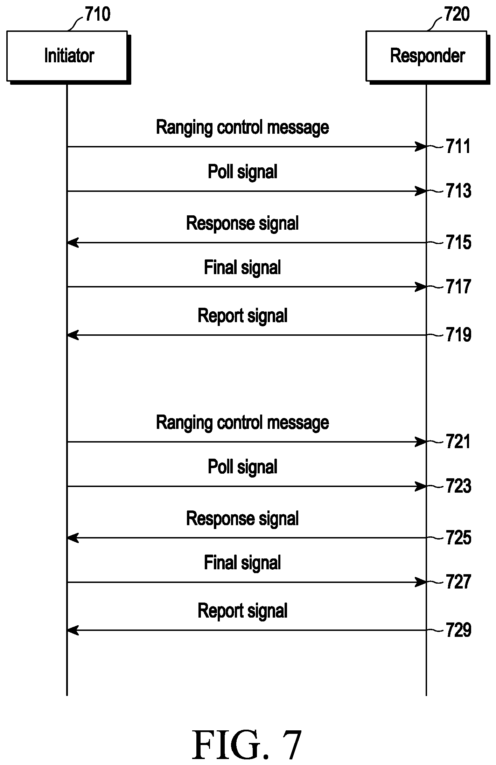

The second external electronic device 230 may include a communication circuit 602, a processor 604, memory 606, an interface 608, and/or a display 610. In an embodiment, the communication circuit 602, the processor 604, the memory 606, the interface 608, and/or the display 610 may be implemented similarly to or substantially the same as the communication circuit 602, the processor 604, the memory 606, the interface 608, and/or the display 610 as described in FIG. 3, respectively, so a detailed description thereof will be omitted. FIG. 7 is a diagram illustrating a UWB ranging process in a wireless communication network according to an embodiment.

Referring to FIG. 7, a UWB ranging process illustrated in FIG. 7 may be a UWB ranging process based on a double side two way ranging (DS-TWR) protocol.

An initiator 710 may be an electronic device which initiates the UWB ranging process, and a responder 720 may be an electronic device which responds to the initiator 710. The initiator 710 may be a tag, and the responder 720 may be an anchor. The anchor may be a UWB equipped device with known and fixed coordinates.

In the DS-TWR protocol, even though there is significantly long response delay (e.g., response delay exceeding threshold time) and there is an inaccurate clock frequency offset, two round-trip time (RTT) measurements are used and combined, thereby time of flight (TOF) (e.g., propagation time $T_{prop}$) with reduced error may be provided. In one (e.g., a first RTT measurement) of the two RTT measurements, an electronic device (e.g., an electronic device 101 in FIG. 1 or FIG. 2) or a first external electronic device (e.g., an electronic device 104 in FIG. 1 or a first external electronic device 210 in FIG. 2) may operate as the initiator 710, and in the other RTT measurement (e.g., a second RTT measurement), a second external electronic device (e.g., an electronic device 102 in FIG. 1 or a second external electronic device(s) 220 in FIG. 2) may operate as the initiator 710. In FIG. 7, operations 711, 713, 715, 717, and 719 may be operations according to the first RTT measurement, and operations 721, 723, 725, 727, and 729 may be operations according to the second RTT measurement.

The initiator 710 may initiate the first RTT measurement by transmitting a ranging control message (RCM) to the responder 720 in operation 711. The RCM may be a data frame carrying an advanced ranging control information element (IE) (an advanced ranging control IE: ARC IE). In an embodiment, the RCM may include at least one parameter related to a UWB ranging operation.

The initiator 710 may transmit a poll signal to the responder 720 in operation 713. The responder 720, which receives the poll signal from the initiator 710, may transmit a response signal to the initiator 710 in response to the poll signal in operation 715. The initiator 710, which receives the response signal from the responder 720, may transmit a final signal to the responder 720 in response to the response signal in operation 717. The responder 720, which receives the final signal from the initiator 710, may transmit a report signal in response to the final signal in operation 719.

The initiator 710 may initiate the second RTT measurement by transmitting an RCM to the responder 720 in operation 721. The RCM may include at least one parameter related to the UWB ranging process. The initiator 710 may transmit a poll signal to the responder 720 in operation 723. The responder 720, which receives the poll signal from the initiator 710, may transmit a response signal to the initiator 710 in response to the poll signal in operation 725. The initiator 710, which receives the response signal from the responder 720, may transmit a final signal to the responder 720 in response to the response signal in operation 727. The responder 720, which receives the final signal from the initiator 710, may transmit a report signal in response to the final signal in operation 729.

When both the first RTT measurement and the second RTT measurement are completed, the UWB ranging process according to the DS-TWR protocol is completed, and ToF (e.g., propagation time $T_{prop}$) and an angle of arrival (AoA) between the electronic device or the first external electronic device and the second external electronic device may be obtained. In this way, a distance (d) between the electronic device or the first external electronic device and the second external electronic device may be obtained based on the obtained ToF, and the distance (d) may be expressed as in the following Equation 1.

< Equation 1>.

$$\text{distance } (d) = \text{speed of light } (C) \times \text{ToF}$$

Further, based on the obtained AoA, an angle between the electronic device or the first external electronic device and the second external electronic device may be obtained.

In FIG. 7, a case in which the UWB ranging process is performed based on the DS-TWR protocol has been described as an example, but the UWB ranging process may also be performed based on other protocols such as a single side two way ranging (SS-TWR) protocol as well as the DS-TWR protocol.

According to an embodiment of the disclosure, an electronic device (e.g., an electronic device 202 in FIG. 1, or a second external electronic device 220 in FIG. 2 or FIG. 5) may include at least one communication circuit (e.g., a communication circuit 502 in FIG. 5), and at least one processor (e.g., a processor 504 in FIG. 5) operably connected to the at least one communication circuit (e.g., the communication circuit 502 in FIG. 5).

According to an embodiment of the disclosure, the at least one processor (e.g., the processor 504 in FIG. 5) may be configured to measure, via the at least one communication circuit (e.g., the communication circuit 502 in FIG. 5), a first distance between the electronic device (e.g., the electronic device 202 in FIG. 1, or the second external electronic device 220 in FIG. 2 or FIG. 5) and a first external electronic device (e.g., an electronic device 101 in FIG. 1, FIG. 2, or FIG. 3) and a second distance between the electronic device (e.g., the electronic device 202 in FIG. 1, or the second external electronic device 220 in FIG. 2 or FIG. 5) and a second external electronic device (e.g., a first external electronic device 210 in FIG. 2 or FIG. 4).

According to an embodiment of the disclosure, the at least one processor (e.g., the processor 504 in FIG. 5) may be further configured to, based on the first distance and the second distance, identify whether a first condition that the first external electronic device (e.g., the electronic device 101 in FIG. 1, FIG. 2, or FIG. 3) and the second external electronic device (e.g., the first external electronic device 210 in FIG. 2 or FIG. 4) exist in a designated area is satisfied.

According to an embodiment of the disclosure, the at least one processor (e.g., the processor 504 in FIG. 5) may be further configured to, based on identifying that the first condition is satisfied, identify whether a function of the electronic device (e.g., the electronic device 202 in FIG. 1, or the second external electronic device 220 in FIG. 2 or FIG. 5) corresponding to the first condition is registered.

According to an embodiment of the disclosure, the at least one processor (e.g., the processor 504 in FIG. 5) may be further configured to, based on identifying that the function of the electronic device (e.g., the electronic device 202 in FIG. 1, or the second external electronic device 220 in FIG. 2 or FIG. 5) corresponding to the first condition is registered, perform the function of the electronic device (e.g., the electronic device 202 in FIG. 1, or the second external electronic device 220 in FIG. 2 or FIG. 5) corresponding to the first condition.

According to an embodiment of the disclosure, the first distance may be measured if a second condition that triggers distance measurement between the electronic device (e.g., the electronic device 202 in FIG. 1, or the second external electronic device 220 in FIG. 2 or FIG. 5) and the first external electronic device (e.g., the electronic device 101 in FIG. 1, FIG. 2, or FIG. 3) is satisfied by the first external electronic device (e.g., the electronic device 101 in FIG. 1, FIG. 2, or FIG. 3).

According to an embodiment of the disclosure, the second distance may be measured if a third condition that triggers distance measurement between the electronic device (e.g., the electronic device 202 in FIG. 1, or the second external electronic device 220 in FIG. 2 or FIG. 5) and the second external electronic device (e.g., the first external electronic device 210 in FIG. 2 or FIG. 4) is satisfied by the second external electronic device (e.g., the first external electronic device 210 in FIG. 2 or FIG. 4). According to an embodiment of the disclosure, the electronic device (e.g., the electronic device 202 in FIG. 1, or the second external electronic device 220 in FIG. 2 or FIG. 5) may further include a display (e.g., a display 510 in FIG. 5).

According to an embodiment of the disclosure, the at least one processor (e.g., the processor 504 in FIG. 5) may be further configured to, based on identifying that the function of the electronic device (e.g., the electronic device 202 in FIG. 1, or the second external electronic device 220 in FIG. 2 or FIG. 5) corresponding to the first condition is not registered, output, via the display (e.g., the display 510 in FIG. 5), information indicating that the first external electronic device (e.g., the electronic device 101 in FIG. 1, FIG. 2, or FIG. 3) and the second external electronic device (e.g., the first external electronic device 210 in FIG. 2 or FIG. 4) exist in the designated area.

According to an embodiment of the disclosure, the at least one processor (e.g., the processor 504 in FIG. 5) may be further configured to, while performing the function of the electronic device (e.g., the electronic device 202 in FIG. 1, or the second external electronic device 220 in FIG. 2 or FIG. 5) corresponding to the first condition, measure the first distance and the second distance via the at least one communication circuit (e.g., the communication circuit 502 in FIG. 5).

According to an embodiment of the disclosure, the at least one processor (e.g., the processor 504 in FIG. 5) may be further configured to, based on the measured first distance and the measured second distance, identify whether the first condition is satisfied.

According to an embodiment of the disclosure, the at least one processor (e.g., the processor 504 in FIG. 5) may be further configured to, based on identifying that the first condition is not satisfied, stop an operation of performing the function of the electronic device (e.g., the electronic device 202 in FIG. 1, or the second external electronic device 220 in FIG. 2 or FIG. 5) corresponding to the first condition.

According to an embodiment of the disclosure, the electronic device (e.g., the electronic device 202 in FIG. 1, or the second external electronic device 220 in FIG. 2 or FIG. 5) may further include memory (memory 506 in FIG. 5).

According to an embodiment of the disclosure, the first condition may include a condition that each of the first distance and the second distance is shorter than or equal to a threshold distance.

According to an embodiment of the disclosure, the at least one processor (e.g., the processor 504 in FIG. 5) may be further configured to, store the first condition in the memory (the memory 506 in FIG. 5) in a format including an identifier of the first external electronic device (e.g., the electronic device 101 in FIG. 1, FIG. 2, or FIG. 3), an identifier of the second external electronic device (e.g., the first external electronic device 210 in FIG. 2 or FIG. 4), a condition indicating that the first external electronic device (e.g., the electronic device 101 in FIG. 1, FIG. 2, or FIG. 3) and the second external electronic device (e.g., the first external electronic device 210 in FIG. 2 or FIG. 4) exist in a designated area, and the threshold distance.

According to an embodiment of the disclosure, distance measurement between the electronic device (e.g., the electronic device 202 in FIG. 1, or the second external electronic device 220 in FIG. 2 or FIG. 5) and the first external electronic device (e.g., the electronic device 101 in FIG. 1, FIG. 2, or FIG. 3), and distance measurement between the electronic device (e.g., the electronic device 202 in FIG. 1, or the second external electronic device 220 in FIG. 2 or FIG. 5) and the second external electronic device (e.g., the first external electronic device 210 in FIG. 2 or FIG. 4) may be based on a ultra wide band (UWB) technology.

According to an embodiment of the disclosure, the second condition may be based at least on movement information or health information of the first external electronic device (e.g., the electronic device 101 in FIG. 1, FIG. 2, or FIG. 3).

According to an embodiment of the disclosure, the second condition may include at least one of a condition that amount of change in movement of the first external electronic device (e.g., the electronic device 101 in FIG. 1, FIG. 2, or FIG. 3) during set time is greater than or equal to threshold amount of change, a condition that a distance moved by the first external electronic device (e.g., the electronic device 101 in FIG. 1, FIG. 2, or FIG. 3) from a location at which the first distance was last measured is longer than or equal to a threshold distance, a condition that has a history of increasing a distance between the first external electronic device (e.g., the electronic device 101 in FIG. 1, FIG. 2, or FIG. 3) and the electronic device (e.g., the electronic device 202 in FIG. 1, or the second external electronic device 220 in FIG. 2 or FIG. 5), a condition that time during which the first external electronic device (e.g., the electronic device 101 in FIG. 1, FIG. 2, or FIG. 3) stays in an area at which the first distance is last measured is shorter than threshold time, a condition that a user of the first external electronic device (e.g., the electronic device 101 in FIG. 1, FIG. 2, or FIG. 3) is not in motion, or condition that time elapsed from time at which the first external electronic device (e.g., the electronic device 101 in FIG. 1, FIG. 2, or FIG. 3) last measured the first distance is longer than or equal to threshold time.

According to an embodiment of this disclosure, the movement information of the first external electronic device (e.g., the electronic device 101 in FIG. 1, FIG. 2, or FIG. 3) may include at least one of a moving speed, a moving direction, or a moving distance of the first external electronic device (e.g., the electronic device 101 in FIG. 1, FIG. 2, or FIG. 3).

According to an embodiment of this disclosure, the health information of the first external electronic device (e.g., the electronic device 101 in FIG. 1, FIG. 2, or FIG. 3) may include at least one of biometric information of a user of the first external electronic device (e.g., the electronic device 101 in FIG. 1, FIG. 2, or FIG. 3), a personal profile of the user of the first external electronic device (e.g., the electronic device 101 in FIG. 1, FIG. 2, or FIG. 3), or exercise information of the user.

According to an embodiment of this disclosure, the movement of the first external electronic device (e.g., the electronic device 101 in FIG. 1, FIG. 2, or FIG. 3) may be identified based on at least one of an acceleration signal or an angular velocity signal detected in the first external electronic device (e.g., the electronic device 101 in FIG. 1, FIG. 2, or FIG. 3).

According to an embodiment of the disclosure, the third condition may be based at least on movement information or health information of the second external electronic device (e.g., the first external electronic device 210 in FIG. 2 or FIG. 4).

According to an embodiment of the disclosure, the third condition may include at least one of a condition that amount of change in movement of the second external electronic device (e.g., the first external electronic device 210 in FIG. 2 or FIG. 4) during set time is greater than or equal to threshold amount of change, a condition that a distance moved by the second external electronic device (e.g., the first external electronic device 210 in FIG. 2 or FIG. 4) from a location at which the second distance was last measured is longer than or equal to a threshold distance, a condition that has a history of increasing a distance between the second external electronic device (e.g., the first external electronic device 210 in FIG. 2 or FIG. 4) and the electronic device (e.g., the electronic device 202 in FIG. 1, or the second external electronic device 220 in FIG. 2 or FIG. 5), a condition that time during which the second external electronic device (e.g., the first external electronic device 210 in FIG. 2 or FIG. 4) stays in an area at which the second distance is last measured is shorter than threshold time, a condition that a user of the second external electronic device (e.g., the first external electronic device 210 in FIG. 2 or FIG. 4) is not in motion, or condition that time elapsed from time at which the second external electronic device (e.g., the first external electronic device 210 in FIG. 2 or FIG. 4) last measured the second distance is longer than or equal to threshold time.

According to an embodiment of this disclosure, the movement information of the second external electronic device (e.g., the first external electronic device 210 in FIG. 2 or FIG. 4) may include at least one of a moving speed, a moving direction, or a moving distance of the second external electronic device (e.g., the first external electronic device 210 in FIG. 2 or FIG. 4).

According to an embodiment of this disclosure, the health information of the second external electronic device (e.g., the first external electronic device 210 in FIG. 2 or FIG. 4) may include at least one of biometric information of a user of the second external electronic device (e.g., the first external electronic device 210 in FIG. 2 or FIG. 4), a personal profile of the user of the second external electronic device (e.g., the first external electronic device 210 in FIG. 2 or FIG. 4), or exercise information of the user.

According to an embodiment of this disclosure, the movement of the second external electronic device (e.g., the first external electronic device 210 in FIG. 2 or FIG. 4) may be identified based on at least one of an acceleration signal or an angular velocity signal detected in the second external electronic device (e.g., the first external electronic device 210 in FIG. 2 or FIG. 4).

According to an embodiment of the disclosure, the at least one processor (e.g., the processor 504 in FIG. 5) may be further configured to change the second condition and the third condition.

According to an embodiment of the disclosure, the at least one processor (e.g., the processor 504 in FIG. 5) may be further configured to transmit, via the at least one communication circuit (e.g., the communication circuit 502 in FIG. 5), the changed second condition to the first external electronic device (e.g., the electronic device 101 in FIG. 1, FIG. 2, or FIG. 3).

According to an embodiment of the disclosure, the at least one processor (e.g., the processor 504 in FIG. 5) may be further configured to transmit, via the at least one communication circuit (e.g., the communication circuit 502 in FIG. 5), the changed third condition to the second external electronic device (e.g., the first external electronic device 210 in FIG. 2 or FIG. 4).

According to an embodiment of the disclosure, the at least one processor (e.g., the processor 504 in FIG. 5) may be further configured to receive, from the first external electronic device (e.g., the electronic device 101 in FIG. 1, FIG. 2, or FIG. 3), at least via the communication circuit, a registration request including the first condition and the function of the electronic device (e.g., the electronic device 202 in FIG. 1, or the second external electronic device 220 in FIG. 2 or FIG. 5) corresponding to the first condition.

According to an embodiment of the disclosure, the at least one processor (e.g., the processor 504 in FIG. 5) may be further configured to, in response to the registration request, register the first condition and the function of the electronic device (e.g., the electronic device 202 in FIG. 1, or the second external electronic device 220 in FIG. 2 or FIG. 5) corresponding to the first condition.

According to an embodiment of the disclosure, the at least one processor (e.g., the processor 504 in FIG. 5) may be further configured to receive, from the second external electronic device (e.g., the first external electronic device 210 in FIG. 2 or FIG. 4), at least via the communication circuit, a registration request including the first condition and the function of the electronic device (e.g., the electronic device 202 in FIG. 1, or the second external electronic device 220 in FIG. 2 or FIG. 5) corresponding to the first condition.

According to an embodiment of the disclosure, the at least one processor (e.g., the processor 504 in FIG. 5) may be further configured to, in response to the registration request, register the first condition and the function of the electronic device (e.g., the electronic device 202 in FIG. 1, or the second external electronic device 220 in FIG. 2 or FIG. 5) corresponding to the first condition.

According to an embodiment of the disclosure, an electronic device (e.g., an electronic device 101 in FIG. 1, FIG. 2, or FIG. 3) may include at least one communication circuit (e.g., a communication module 190 in FIG. 1 or a communication circuit 302 in FIG. 3), and at least one processor (e.g., a processor 120 in FIG. 1 or a processor 304 in FIG. 3) operably connected to the at least one communication circuit the at least one communication circuit (e.g., the communication module 190 in FIG. 1 or the communication circuit 302 in FIG. 3).

According to an embodiment of the disclosure, the at least one processor (e.g., the processor 120 in FIG. 1 or the processor 304 in FIG. 3) may be configured to register, via the at least one communication circuit (e.g., the communication module 190 in FIG. 1 or the communication circuit 302 in FIG. 3), with a second external electronic device (e.g., an electronic device 102 in FIG. 1, or a second external electronic device 220 in FIG. 2 or FIG. 3), a first condition that the electronic device (e.g., the electronic device 101 in FIG. 1, FIG. 2, or FIG. 3) and a first external electronic device (e.g., an electronic device 104 in FIG. 1, or a first external electronic device 210 in FIG. 2 or FIG. 4) exist in a designated area, and a function of the second external electronic device (e.g., the electronic device 102 in FIG. 1, or the second external electronic device 220 in FIG. 2 or FIG. 3) corresponding to the first condition.

According to an embodiment of the disclosure, the at least one processor (e.g., the processor 120 in FIG. 1 or the processor 304 in FIG. 3) may be further configured to identify whether a second condition which triggers distance measurement between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3) is satisfied.

According to an embodiment of the disclosure, the at least one processor (e.g., the processor 120 in FIG. 1 or the processor 304 in FIG. 3) may be further configured to, based on identifying that the second condition is satisfied, measure, via the at least one communication circuit (e.g., the communication module 190 in FIG. 1 or the communication circuit 302 in FIG. 3), a first distance between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3).

According to an embodiment of the disclosure, the at least one processor (e.g., the processor 120 in FIG. 1 or the processor 304 in FIG. 3) may be further configured to, after measuring the first distance, identify whether the second condition is satisfied.

According to an embodiment of the disclosure, the at least one processor (e.g., the processor 120 in FIG. 1 or the processor 304 in FIG. 3) may be further configured to, based on identifying that the second condition is satisfied, measure the first distance via the at least one communication circuit (e.g., the communication module 190 in FIG. 1 or the communication circuit 302 in FIG. 3).

According to an embodiment of the disclosure, the first condition may include a condition that each of the first distance and a second distance between the first external electronic device (e.g., the electronic device 104 in FIG. 1, or the first external electronic device 210 in FIG. 2 or FIG. 4) and the second external electronic device (e.g., the electronic device 102 in FIG. 1, or the second external electronic device 220 in FIG. 2 or FIG. 3) is shorter than or equal to a threshold distance.

According to an embodiment of the disclosure, the first condition may be registered with the second external electronic device (e.g., the electronic device 102 in FIG. 1, or the second external electronic device 220 in FIG. 2 or FIG. 3) in a format including an identifier of the electronic device (e.g., the electronic device 101 in FIG. 1, FIG. 2, or FIG. 3), an identifier of the first external electronic device (e.g., the electronic device 104 in FIG. 1, or the first external electronic device 210 in FIG. 2 or FIG. 4), a condition indicating that the electronic device (e.g., the electronic device 101 in FIG. 1, FIG. 2, or FIG. 3) and the first external electronic device (e.g., the electronic device 104 in FIG. 1, or the first external electronic device 210 in FIG. 2 or FIG. 4) exist in a designated area, and the threshold distance.

According to an embodiment of the disclosure, distance measurement between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3), and distance measurement between the first external electronic device (e.g., the electronic device 104 in FIG. 1, or the first external electronic device 210 in FIG. 2 or FIG. 4) and the second external electronic device (e.g., the electronic device 102 in FIG. 1, or the second external electronic device 220 in FIG. 2 or FIG. 3) may be based on a ultra wide band (UWB) technology.

According to an embodiment of the disclosure, the second condition may be based at least on movement information or health information of the electronic device (e.g., the electronic device 101 in FIG. 1, FIG. 2, or FIG. 3).

According to an embodiment of the disclosure, the second condition may include at least one of a condition that amount of change in movement of the electronic device (e.g., the electronic device 101 in FIG. 1, FIG. 2, or FIG. 3) during set time is greater than or equal to threshold amount of change, a condition that a distance moved by the electronic device (e.g., the electronic device 101 in FIG. 1, FIG. 2, or FIG. 3) from a location at which the first distance was last measured is longer than or equal to a threshold distance, a condition that has a history of increasing a distance between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3), a condition that time during which the electronic device (e.g., the electronic device 101 in FIG. 1, FIG. 2, or FIG. 3) stays in an area at which the first distance is last measured is shorter than threshold time, a condition that a user of the electronic device (e.g., the electronic device 101 in FIG. 1, FIG. 2, or FIG. 3) is not in motion, or condition that time elapsed from time at which the electronic device (e.g., the electronic device 101 in FIG. 1, FIG. 2, or FIG. 3) last measured the first distance is longer than or equal to threshold time.

According to an embodiment of the disclosure, the electronic device (e.g., the electronic device 101 in FIG. 1, FIG. 2, or FIG. 3) may further include at least one sensor (e.g., a sensor module 176 in FIG. 1, or a sensor module 312 in FIG. 3).

According to an embodiment of the disclosure, the at least one sensor (e.g., the sensor module 176 in FIG. 1, or the sensor module 312 in FIG. 3) may include at least one of an acceleration sensor, or an angular velocity sensor.

According to an embodiment of the disclosure, the movement information of the electronic device (e.g., the electronic device 101 in FIG. 1, FIG. 2, or FIG. 3) includes at least one of a moving speed, a moving direction, or a moving distance of the electronic device (e.g., the electronic device 101 in FIG. 1, FIG. 2, or FIG. 3).

According to an embodiment of the disclosure, the health information of the electronic device (e.g., the electronic device 101 in FIG. 1, FIG. 2, or FIG. 3) may include at least one of biometric information of a user of the electronic device (e.g., the electronic device 101 in FIG. 1, FIG. 2, or FIG. 3), a personal profile of the user of the electronic device (e.g., the electronic device 101 in FIG. 1, FIG. 2, or FIG. 3), or exercise information of the user.

According to an embodiment of the disclosure, the at least one sensor (e.g., the sensor module 176 in FIG. 1, or the sensor module 312 in FIG. 3) may include the acceleration sensor.

According to an embodiment of the disclosure, the movement of the electronic device (e.g., the electronic device 101 in FIG. 1, FIG. 2, or FIG. 3) may be identified based on an acceleration signal detected by the acceleration sensor.

According to an embodiment of the disclosure, if amount of change in a direct current (DC) value of the acceleration signal during the set time is greater than or equal to the threshold amount of change, the amount of change in the movement of the electronic device (e.g., the electronic device 101 in FIG. 1, FIG. 2, or FIG. 3) may be identified as being greater than or equal to the threshold amount of change.

According to an embodiment of the disclosure, the at least one sensor (e.g., the sensor module 176 in FIG. 1, or the sensor module 312 in FIG. 3) may include the angular velocity sensor.

According to an embodiment of the disclosure, the movement of the electronic device (e.g., the electronic device 101 in FIG. 1, FIG. 2, or FIG. 3) may be identified based on an angular velocity signal detected by the angular velocity sensor.

According to an embodiment of the disclosure, if amount of change in a direct current (DC) value of the angular velocity signal during the set time is greater than or equal to the threshold amount of change, the amount of change in the movement of the electronic device (e.g., the electronic device 101 in FIG. 1, FIG. 2, or FIG. 3) may be identified as being greater than or equal to the threshold amount of change.

According to an embodiment of the disclosure, the at least one processor (e.g., the processor 120 in FIG. 1 or the processor 304 in FIG. 3) may be further configured to receive, via the at least one communication circuit (e.g., the communication module 190 in FIG. 1 or the communication circuit 302 in FIG. 3), a changed second condition from the second external electronic device (e.g., the electronic device 102 in FIG. 1, or the second external electronic device 220 in FIG. 2 or FIG. 3).

According to an embodiment of the disclosure, the at least one processor (e.g., the processor 120 in FIG. 1 or the processor 304 in FIG. 3) may be further configured to update, as the changed second condition, the second condition which triggers distance measurement between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3).

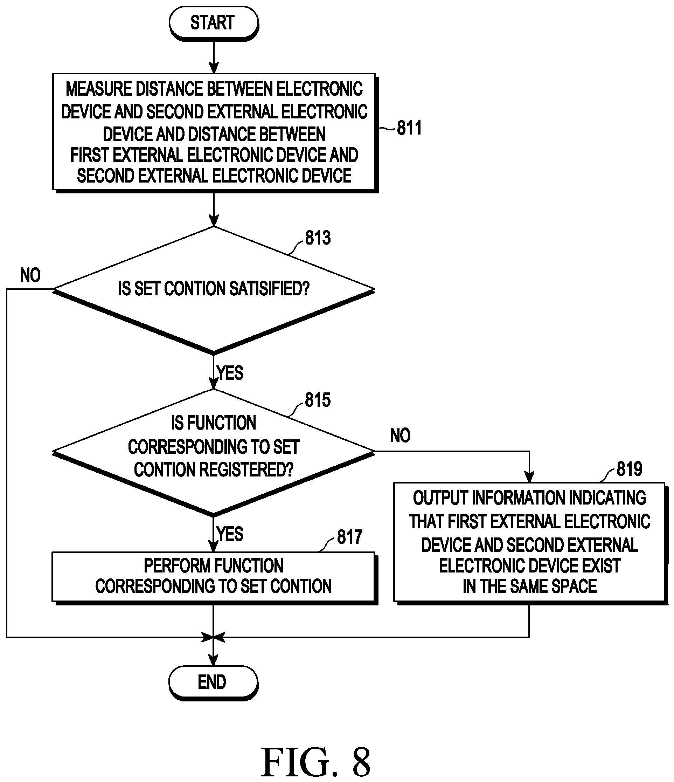

FIG. 8 is a flowchart illustrating an operating process of a second external electronic device in a wireless communication network according to an embodiment.

Referring to FIG. 8, an operating process of a second external electronic device (e.g., an electronic device 102 in FIG. 1 or a second external electronic device(s) 220 in FIG. 2) illustrated in FIG. 8 may be an operating process according to a process for providing a location-based service (e.g., an automation service providing a multi-user automation function) described in FIG. 2.

In operation 811, the second external electronic device (e.g., the electronic device 102 in FIG. 1 or the second external electronic device(s) 220 in FIG. 2) (e.g., a processor 504 in FIG. 5) may measure, via a communication circuit (e.g., a communication circuit 502 in FIG. 5), a distance between an electronic device (e.g., an electronic device 101 in FIG. 1 or FIG. 2) and the second external electronic device and a distance between a first external electronic device (e.g., an electronic device 104 in FIG. 1 or a first external electronic device 210 in FIG. 2) and the second external electronic device. In an embodiment, the distance between the electronic device and the second external electronic device and the distance between the first external electronic device and the second electronic device may be measured based on a UWB technology.

In an embodiment, the second external electronic device may measure the distance between the electronic device and the second external electronic device based on the UWB technology if a trigger condition which is a condition for triggering distance measurement (e.g., distance measurement based on the UWB technology) between the electronic device and the second external electronic device is satisfied by the electronic device. In an embodiment, the electronic device may perform a UWB ranging process for distance measurement between the electronic device and the second external electronic device if the trigger condition is satisfied. The second external electronic device may perform a distance measurement operation between the second external electronic device and the electronic device as a poll signal is received from the electronic device via the communication circuit. The trigger condition of the electronic device may be implemented to be similar to or substantially the same as that described in FIG. 2, so a detailed description thereof will be omitted.

In an embodiment, the second external electronic device may measure the distance between the first external electronic device and the second external electronic device based on the UWB technology if a trigger condition which is a condition for triggering distance measurement (e.g., distance measurement based on the UWB technology) between the first external electronic device and the second external electronic device is satisfied by the first external electronic device. In an embodiment, the first external electronic device may perform a UWB ranging process for distance measurement between the first external electronic device and the second external electronic device if the trigger condition is satisfied. The second external electronic device may perform a distance measurement operation between the second external electronic device and the first external electronic device as a poll signal is received from the first external electronic device via the communication circuit. The trigger condition of the first external electronic device may be implemented to be similar to or substantially the same as that described in FIG. 2, so a detailed description thereof will be omitted.

In operation 813, the second external electronic device may identify whether a set condition that the electronic device and the first external electronic device exist in a designated area (e.g., the same space) is satisfied based on the measured distance between the electronic device and the second external electronic device and the measured distance between the first external electronic device and the second external electronic device. As a result of the identification in operation 813, if the set condition is not satisfied (Operation 813-No), the second external electronic device may terminate without performing any further operations.

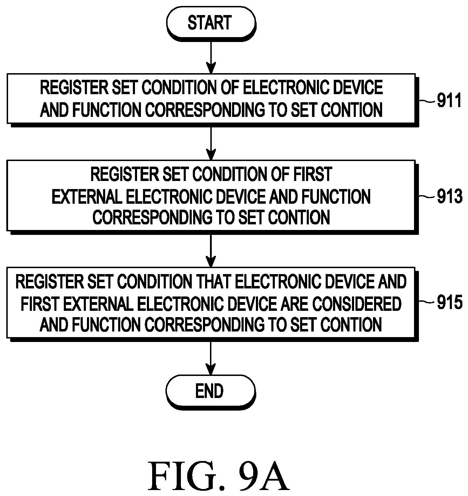

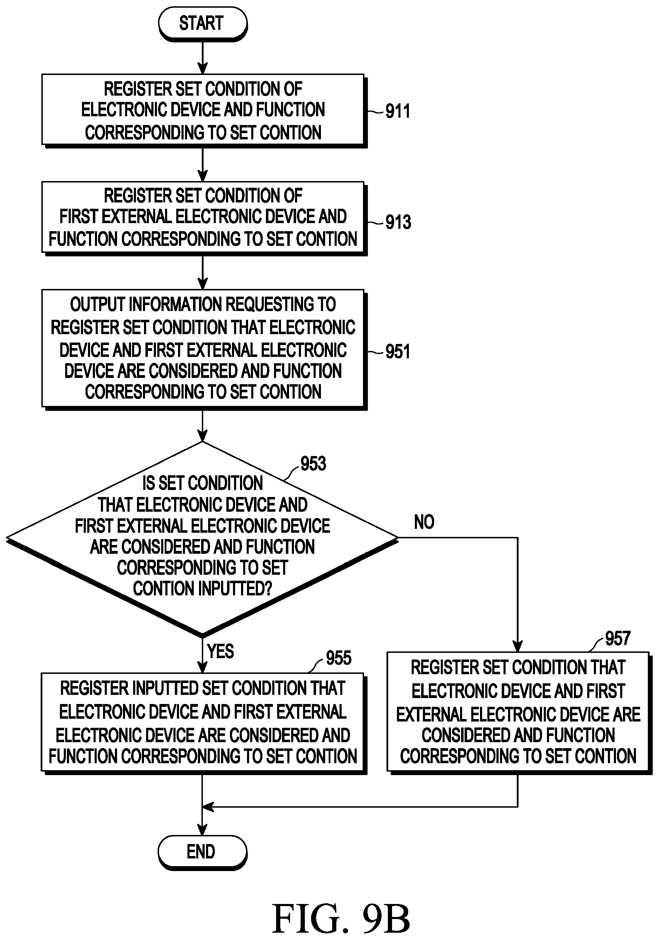

As the result of the identification in operation 813, if the set condition is satisfied (Operation 813-Yes), the second external electronic device may identify whether a function of the second external electronic device corresponding to the set condition is registered in memory (e.g., memory 506 in FIG. 5) in operation 815. As a result of the identification in operation 815, if the function of the second external electronic device corresponding to the set condition is registered (Operation 815-Yes), the second external electronic device may perform the function of the second external electronic device corresponding to the set condition in operation 817. In an embodiment, the set condition and the function of the second external electronic device corresponding to the set condition may be registered in the memory of the second external electronic device in various formats, and an operation of registering the set condition and the function of the second external electronic device corresponding to the set condition will be described with reference to FIGS. 9a and 9b, so a detailed description thereof will be omitted herein.

As the result of the identification in operation 815, if the function of the second external electronic device corresponding to a first condition is not registered (Operation 815-No), the second external electronic device may output, via a display (e.g., a display 510 in FIG. 5), information indicating that the electronic device and the first external electronic device exist in the designated area (e.g., the same space) in operation 819. In an embodiment, the information indicating that the electronic device and the first external electronic device exist in the designated area may be implemented in various forms (e.g., a text message or a voice message). The information indicating that the electronic device and the first external electronic device exist in the designated area may further include information requesting to register the function of the second external electronic device corresponding to the set condition. In an embodiment, as the information requesting to register the function of the second external electronic device corresponding to the set condition is outputted, the second external electronic device may obtain a user input for registering the function of the second external electronic device corresponding to the set condition. The second external electronic device may register the set condition and the function of the second external electronic device corresponding to the set condition based on the obtained user input. In an embodiment, as the information requesting to register the function of the second external electronic device corresponding to the set condition is outputted, the second external electronic device may receive, via the communication circuit, from at least one of the electronic device 101 or the first external electronic device 210, a user input for registering the function of the second external electronic device 220 which is performed if the set condition is satisfied. The second external electronic device may register the set condition and the function of the second external electronic device corresponding to the set condition based on the received user input.

FIG. 9a is a flowchart illustrating an operating process of a second external electronic device in a wireless communication network according to an embodiment.

Referring to FIG. 9a, an operating process of a second external electronic device (e.g., an electronic device 102 in FIG. 1 or a second external electronic device(s) 220 in FIG. 2) illustrated in FIG. 9a may be an operating process according to a process for providing a location-based service (e.g., an automation service providing a multi-user automation function) described in FIG. 2.

In operation 911, the second external electronic device (e.g., the electronic device 102 in FIG. 1 or the second external electronic device(s) 220 in FIG. 2) (e.g., a processor 504 in FIG. 5) may register, in memory (e.g., memory 506 in FIG. 5), a set condition of an electronic device (e.g., an electronic device 101 in FIG. 1 or FIG. 2) for the second external electronic device and a function of the second external electronic device corresponding to the set condition of the electronic device. In an embodiment, the set condition of the electronic device may include an identifier of the electronic device, a condition indicating that the electronic device exists alone, and/or a threshold distance. In an embodiment, the identifier of the electronic device may include at least one of an application identifier (App ID) of the electronic device or a user identifier (User ID) of the electronic device.

In an embodiment, if a location-based service capable of controlling the function of the second external electronic device (e.g., an automation service providing a multi-user automation function) is implemented with a plurality of applications, the second external electronic device may support the plurality of applications. In order to distinguish the plurality of applications, a unique App ID may be assigned to each of the plurality of applications.

In an embodiment, if there are a plurality of users who may control the function of the second external electronic device, a unique User ID may be allocated to each of the plurality of users to distinguish the plurality of users. In an embodiment, the plurality of users may be users who may control the function of the second external electronic device in one application.

In an embodiment, the threshold distance may be a reference distance between the electronic device and the second external electronic device at which the function of the second external electronic device may be performed. If the distance between the second external electronic device and the electronic device is shorter than or equal to the threshold distance, the function of the second external electronic device corresponding to the set condition of the electronic device may be performed.

In an embodiment, the second external electronic device may obtain, via an input module (e.g., an input module 512 in FIG. 5), a user input including the set condition of the electronic device and the function of the second external electronic device corresponding to the set condition of the electronic device. In an embodiment, the second external electronic device may receive, from the electronic device via a communication circuit, a registration request including the set condition and the function of the second external electronic device corresponding to the set condition of the electronic device. The second external electronic device may register the set condition of the electronic device and the function of the second external electronic device corresponding to the set condition of the electronic device which are obtained from the user input or the registration request.

In operation 913, the second external electronic device may register, in the memory, a set condition of a first external electronic device (e.g., an electronic device 104 in FIG. 1 or a first external electronic device 210 in FIG. 2) for the second external electronic device and a function of the second external electronic device corresponding to the set condition of the first external electronic device. In an embodiment, the set condition of the first external electronic device may include an identifier of the first external electronic device, a condition indicating that the first external electronic device exists alone, and/or a threshold distance. In an embodiment, the identifier of the first external electronic device, the condition indicating that the first external electronic device exists alone, and/or the threshold distance may be implemented to be similar to or substantially the same as the identifier of the electronic device, the condition indicating that the electronic device exists alone, and/or the threshold distance described in operation 911, so a detailed description thereof will be omitted herein.

In an embodiment, the second external electronic device may obtain, via the input module, a user input including the set condition of the first external electronic device and the function of the second external electronic device corresponding to the set condition of the first external electronic device. In an embodiment, the second external electronic device may receive, from the first external electronic device via the communication circuit, a registration request including the set condition and the function of the second external electronic device corresponding to the set condition of the first external electronic device. The second external electronic device may register the set condition of the first external electronic device and the function of the second external electronic device corresponding to the set condition of the first external electronic device which are obtained from the user input or the registration request.

In FIG. 9a, an example has been described where operation 911 is performed and operation 913 is performed sequentially, but operations 911 and 913 may also be performed in parallel.

In operation 915, the second external electronic device may register, in the memory, a set condition for the second external electronic device that the electronic device and the first external electronic device are considered and a function of the second external electronic device corresponding to the set condition that the electronic device and the first external electronic device are considered. In an embodiment, the set condition that the electronic device and the first external electronic device are considered may represent an identifier of each of the electronic device and the first external electronic device, a condition indicating that the electronic device and the first external electronic device co-exist, and/or a threshold distance.

In an embodiment, the identifier of each of the electronic device and the first external electronic device and/or the threshold distance may be implemented to be similar to or substantially the same as the identifier of the electronic device and/or the threshold distance described in operation 911, so a detailed description thereof will be omitted herein.

In an embodiment, the second external electronic device may obtain, via the input module, a user input including the set condition that the electronic device and the first external electronic device are considered and the function of the second external electronic device corresponding to the set condition that the electronic device and the first external electronic device are considered. In an embodiment, the second external electronic device may receive, from the electronic device or the first external electronic device via the communication circuit, a registration request including the set condition that the electronic device and the first external electronic device are considered and the function of the second external electronic device corresponding to the set condition that the electronic device and the first external electronic device are considered. The second external electronic device may register the set condition that the electronic device and the first external electronic device are considered and the function of the second external electronic device corresponding to the set condition that the electronic device and the first external electronic device are considered which are obtained from the user input or the registration request.

In an embodiment, if the second external electronic device is a TV, the second external electronic device may register, in a table format as shown in Table 1 below, a set condition of the electronic device and a function of the second external electronic device corresponding to the set condition of the electronic device, a set condition of the first external electronic device and a function of the second external electronic device corresponding to the set condition of the first external electronic device, and a set condition that the electronic device and the first external electronic device are considered, and a function of the second external electronic device corresponding to the set condition that the electronic device and the first external electronic device are considered.

<Table 1>

| App ID | User ID | Presence | Range (cm) | Action |
|---|---|---|---|---|
| AAA | 1 | Alone | 100 | All Channel Allow |
| AAA | 2 | Alone | 100 | Limit Channel |
| AAA | 1, 2 | Together | 100 | Limit Channel |
| BBB | 1 | Alone | 150 | Notice Weather |

In Table 1, "Presence" may indicate whether a condition set for the second external electronic device considers only one user (e.g., a single-user condition) or multiple users (e.g., a multi-user condition). For example, "Alone" indicates that the condition set for the second external electronic device considers only the one user, and "Together" indicates that the condition set for the second external electronic device considers the multiple users.

In Table 1, "Range" indicates a threshold distance, and may be implemented in units of cm, for example.

In Table 1, "Action" indicates a function of the second external electronic device which is performed if the condition is satisfied.

Table 1 may represent a table generated if the second external electronic device is controlled by an application AAA providing a multi-user automation function and an application BBB.

In Table 1, if the set condition of the electronic device includes a condition that the application ID is AAA, the User ID is 1, the Presence is Alone, and the threshold distance is 100 cm, the function of the second external electronic device performed if the set condition of the electronic device is satisfied may be a function (All Channel Allow) of providing all broadcast channels.

In Table 1, if the set condition of the first external electronic device includes a condition that the application ID is AAA, the User ID is 2, the Presence is Alone, and the threshold distance is 100 cm, the function of the second external electronic device performed if the set condition of the first external electronic device is satisfied may be a function (Limit Channel) of providing limited broadcast channels.

In Table 1, if the set condition that the electronic device and the first external electronic device are considered includes a condition that the application ID is AAA, the User IDs are 1 and 2, the Presence is Together, and the threshold distance is 100 cm, the function of the second external electronic device performed if the set condition of the electronic device is satisfied may be a function (Limit Channel) of providing limited broadcast channels.

In an embodiment, if the second external electronic device is an air conditioner, the second external electronic device may register, in a table format as shown in Table 1 below, a set condition of the electronic device and a function of the second external electronic device corresponding to the set condition of the electronic device, a set condition of the first external electronic device and a function of the second external electronic device corresponding to the set condition of the first external electronic device, and a set condition that the electronic device and the first external electronic device are considered, and a function of the second external electronic device corresponding to the set condition that the electronic device and the first external electronic device are considered.

<Table 2>

| App ID | User ID | Presence | Range (cm) | Action |
|---|---|---|---|---|
| AAA | 1 | Alone | 200 | Temp: 24 |
| AAA | 2 | Alone | 200 | Temp: 18 |

(continued)

| App ID | User ID | Presence | Range (cm) | Action |
|--------|---------|----------|------------|--------|
| AAA | 1, 2 | Together | 200 | Temp: 22 |

Table 2 may represent a table generated if the second external electronic device is controlled by an application AAA providing a multi-user automation function.

In Table 2, if the set condition of the electronic device includes a condition that the application ID is AAA, the User ID is 1, the Presence is Alone, and the threshold distance is 200 cm, the function of the second external electronic device performed if the set condition of the electronic device is satisfied may be a cooling function (Temp: 24) set to 24 degrees.

In Table 2, if the set condition of the first external electronic device includes a condition that the application ID is AAA, the User ID is 2, the Presence is Alone, and the threshold distance is 200 cm, the function of the second external electronic device performed if the set condition of the first external electronic device is satisfied may be a cooling function (Temp: 18) set to 18 degrees.

In Table 2, if the set condition that the electronic device and the first external electronic device are considered includes a condition that the application ID is AAA, the User IDs are 1 and 2, the Presence is Together, and the threshold distance is 200 cm, the function performed if the set condition of the electronic device is satisfied may be a cooling function (Temp: 22) set to 22 degrees.

FIG. 9b is a flowchart illustrating an operating process of a second external electronic device in a wireless communication network according to an embodiment.

Referring to FIG. 9b, the operating process of the second external electronic device (e.g., an electronic device 102 in FIG. 1 or a second external electronic device(s) 220 in FIG. 2) illustrated in FIG. 9b may be an operating process according to a process for providing a location-based service (e.g., an automation service providing a multi-user automation function) described in FIG. 2.

In FIG. 9b, operations 911 and 913 may be implemented to be similar to or substantially the same as operations 911 and 913 described in FIG. 9a, so a detailed description thereof will be omitted herein.

In operation 951, when a set condition of an electronic device (e.g., an electronic device 101 in FIG. 1 or 2) and a function of the second external electronic device corresponding to the set condition of the electronic device, and a set condition of a first external electronic device (e.g., an electronic device 104 in FIG. 1 or a first external electronic device 210 in FIG. 2) and a function of the second external electronic device corresponding to the set condition of the first external electronic device are registered, the second external electronic device (e.g., the electronic device 102 in FIG. 1 or the second external electronic device(s) 220 in FIG. 2) (e.g., a processor (504) in FIG. 5) may output, via a display (e.g., a display (510) in FIG. 5), information requesting to register a set condition that the electronic device and the first external electronic device are considered and a function of the second external electronic device corresponding to the set condition that the electronic device and the first external electronic device are considered. Hereinafter, for a convenience of description, the set condition that the electronic device and the first external electronic device are considered in FIG. 9b will be referred to as a "first set condition", and the information requesting to register the function of the second external electronic device corresponding to the set condition that the electronic device and the first external electronic device are considered will be referred to as "registration request information". FIG. 9b illustrates an example in which the registration request information is outputted via the display, such as a text message, but the registration request information may be implemented in various other forms, such as a voice message. FIG. 9b illustrates an example in which the second external electronic device outputs the registration request information, but the second external electronic device may also request register to the first set condition and the function of the second external electronic device corresponding to the first set condition by outputting, in various forms (e.g., a text message or a voice message), information indicating that the electronic device and the first external electronic device are present in a designated area (e.g., the same space) without outputting the registration request information.

In operation 953, the second external electronic device may identify whether the first set condition and the function of the second external electronic device corresponding to the first set condition are inputted. In an embodiment, the second external electronic device may identify whether the first set condition and the function of the second external electronic device corresponding to the first set condition are inputted via an input module (e.g., an input module 512 in FIG. 5). In an embodiment, the second external electronic device may identify whether a signal including the first set condition and the function of the second external electronic device corresponding to the first set condition is received from at least one of the electronic device or the first external electronic device via a communication circuit (e.g., a communication circuit 502 in FIG. 5), and if the signal is received, the second external electronic device may identify that the first set condition and the function of the second external electronic device corresponding to the first set condition are inputted.

As a result of identification in operation 953, if the first set condition and the function of the second external electronic device corresponding to the first set condition are inputted (Operation 953-Yes), the second external electronic device may register the inputted first set condition and function of the second external electronic device corresponding to the first set condition in memory (e.g., memory 506 in FIG. 5). The operation of registering the first set condition and the function of the second external electronic device corresponding to the first set condition by the second external electronic device may be implemented to be similar to or substantially the same as that described in operation 915 in FIG. 9a, so a detailed description thereof will be omitted herein.

As a result of identification in operation 953, if the first set condition and the function of the second external electronic device corresponding to the first set condition are not inputted (Operation 953-No), the second external electronic device may set and register the first set condition and the function of the second external electronic device corresponding to the first set condition. If the first set condition and the function of the second external electronic device corresponding to the first set condition are not inputted, the second external electronic device may set and register the first set condition and the function of the second external electronic device corresponding to the first set condition based on the set condition of the electronic device and the function of the second external electronic device corresponding to the set condition of the electronic device, and the set condition of the first external electronic device and the function of the second external electronic device corresponding to the set condition of the first external electronic device. The operation of the second external electronic device registering the first set condition and the function of the second external electronic device corresponding to the first set condition may be implemented to be similar to or substantially the same as that described in operation 915 in FIG. 9a, so a detailed description thereof will be omitted herein.

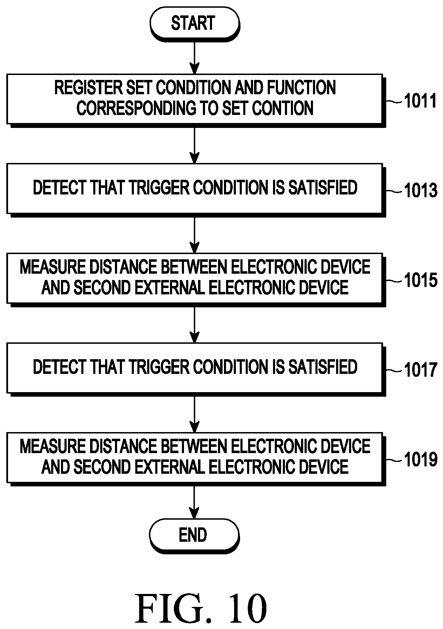

FIG. 10 is a flowchart illustrating an operating process of an electronic device in a wireless communication network according to an embodiment.

Referring to FIG. 10, an operating process of an electronic device (e.g., an electronic device 101 in FIG. 1 or 2) illustrated in FIG. 10 may be an operating process according to a process for providing a location-based service (e.g., an automation service providing a multi-user automation function) described in FIG. 2.

Referring to FIG. 10, in operation 1011, a processor (e.g., a processor 120 in FIG. 1 or a processor 304 in FIG. 3) of an electronic device (e.g., an electronic device 101 in FIG. 1 or FIG. 2) may register a set condition of the electronic device and a function of a second external electronic device (e.g., an electronic device 102 in FIG. 1 or a second external electronic device(s) 220 in FIG. 2) corresponding to the set condition of the electronic device by transmitting, to the second external electronic device, via a communication circuit (e.g., a communication module 190 in FIG. 1 or a communication circuit 302 in FIG. 3), registration request including the set condition of the electronic device and the function of the second external electronic device corresponding to the set condition of the electronic device.

In operation 1013, the electronic device may detect that a trigger condition is satisfied, which is a condition for triggering distance measurement between the electronic device and the second external electronic device based on a UWB technology. The trigger condition of the electronic device may be implemented to be similar to or substantially the same as that described in FIG. 2, so a detailed description thereof will be omitted.

The electronic device which detects that the trigger condition is satisfied may, in operation 1015, measure a distance between the electronic device and the second external electronic device based on the UWB technology. The electronic device may start performing an operation of measuring the distance between the electronic device and the second external electronic device by transmitting a poll signal to the second external electronic device via the communication circuit. The second external electronic device may perform the distance measurement operation between the second external electronic device and the electronic device as the poll signal is received from the electronic device via communication circuit, and if the measured distance between the electronic device and the second external electronic device is less than or equal to a threshold distance, the second external electronic device may perform the function of the second external electronic device corresponding to the set condition of the electronic device, or a function of the second external electronic device corresponding to a set condition that the electronic device and a first external electronic device (e.g., an electronic device 104 in FIG. 1 or a first external electronic device 210 in FIG. 2) are considered.

After measuring the distance between the electronic device and the second external electronic device based on the UWB technology, the electronic device may detect that the trigger condition is satisfied in operation 1017. As the trigger condition is satisfied, the electronic device may measure the distance between the electronic device and the second external electronic device based on the UWB technology in operation 1019. Operations 1017 and 1019 may be implemented to be similar to or substantially the same as operations 1013 and 1015, so a detailed description thereof will be omitted herein.

As described in FIG. 10, in a process of providing a described location-based service (e.g., an automation service providing a multi-user automation function), the electronic device may prevent unnecessary power consumption by performing the distance measurement operation based on the UWB technology only if the trigger condition is satisfied.

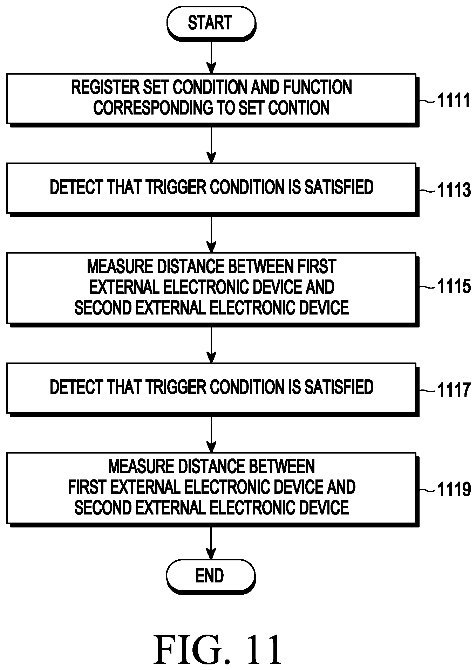

FIG. 11 is a flowchart illustrating an operating process of a first external electronic device in a wireless communication network according to an embodiment.

Referring to FIG. 11, an operating process of a first external electronic device (e.g., an electronic device 104 in FIG. 1 or a first external electronic device 210 in FIG. 2) illustrated in FIG. 10 may be an operating process according to a process for providing a location-based service (e.g., an automation service providing a multi-user automation function) described in FIG. 2.

Referring to FIG. 11, in operation 1111, a processor (e.g., a processor 404 in FIG. 3) of the first external electronic device (e.g., the electronic device 104 in FIG. 1 or the first external electronic device 210 in FIG. 2) may register a set condition of the first external electronic device and a function of a second external electronic device (e.g., an electronic device 102 in FIG. 1 or a second external electronic device(s) 220 in FIG. 2) corresponding to the set condition of the first external electronic device by transmitting, to the second external electronic device, via a communication circuit (e.g., a communication circuit 402 in FIG. 4), registration request including the set condition of the first external electronic device and the function of the second external electronic device corresponding to the set condition of the first external electronic device.

In operation 1113, the first external electronic device may detect that a trigger condition is satisfied, which is a condition for triggering distance measurement between the first external electronic device and the second external electronic device based on a UWB technology. The trigger condition of the first external electronic device may be implemented to be similar to or substantially the same as that described in FIG. 2, so a detailed description thereof will be omitted.

The first external electronic device which detects that the trigger condition is satisfied may, in operation 1015, measure a distance between the first external electronic device and the second external electronic device based on the UWB technology. The first external electronic device may start performing an operation of measuring the distance between the first external electronic device and the second external electronic device by transmitting a poll signal to the second external electronic device via the communication circuit. The second external electronic device may perform the distance measurement operation between the second external electronic device and the first external electronic device as the poll signal is received from the first external electronic device via communication circuit, and if the measured distance between the first external electronic device and the second external electronic device is less than or equal to a threshold distance, the second external electronic device may perform the function of the second external electronic device corresponding to the set condition of the first external electronic device, or a function of the second external electronic device corresponding to a set condition that the first external electronic device and an electronic device (e.g., an electronic device 101 in FIG. 1) are considered.

After measuring the distance between the first external electronic device and the second external electronic device based on the UWB technology, the first external electronic device may detect that the trigger condition is satisfied in operation 1117. As the trigger condition is satisfied, the first external electronic device may measure the distance between the first external electronic device and the second external electronic device based on the UWB technology in operation 1119. Operations 1117 and 1119 may be implemented to be similar to or substantially the same as operations 1113 and 1115, so a detailed description thereof will be omitted herein.

As described in FIG. 11, in a process of providing a described location-based service (e.g., an automation service providing a multi-user automation function), the first external electronic device may prevent unnecessary power consumption by performing the distance measurement operation based on the UWB technology only if the trigger condition is satisfied.

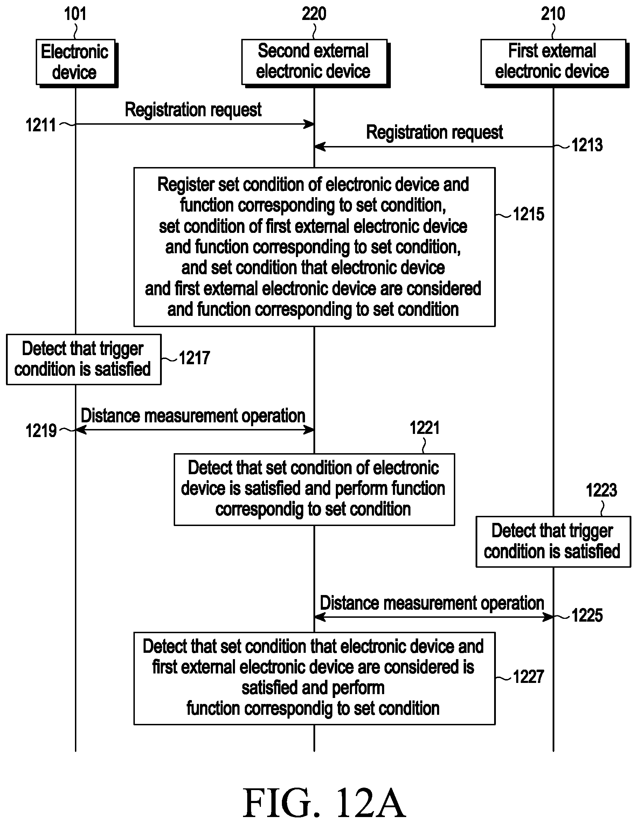

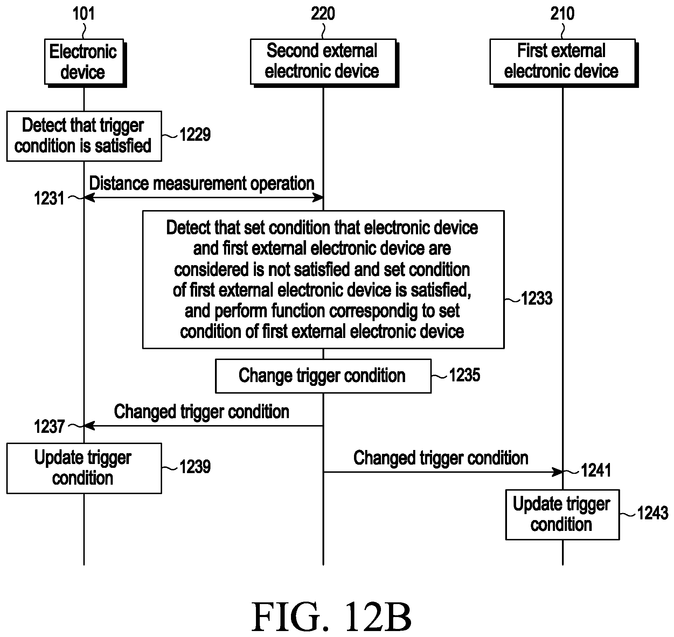

FIGS. 12a and 12b are signal flow diagrams illustrating an operating process of an electronic device, a first external electronic device, and a second external electronic device according to a location-based service in a wireless communication network according to an embodiment.

Referring to FIGS. 12a and 12b, an operating processes of an electronic device (e.g., an electronic device 101 in FIG. 1 or FIG. 2), a first external electronic device (e.g., an electronic device 104 in FIG. 1 or a first external electronic device 210 in FIG. 2), and a second external electronic device (e.g., an electronic device 102 in FIG. 1 or a second external electronic device(s) 220 in FIG. 2) illustrated in FIGS. 12a and 12b may be an operating process according to a process for providing a location-based service (e.g., an automation service providing a multi-user automation function) described in FIG. 2.

In operation 1211, the electronic device 101 may transmit, to the second external electronic device 220, registration request including a set condition of the electronic device 101 and a function of the second external electronic device 220 corresponding to the set condition of the electronic device 101. In an embodiment, the registration request in operation 1211 may include AppID, Range, Condition, and Action. The registration request including the set condition of the electronic device 101 and the function of the second external electronic device (220) corresponding to the set condition of the electronic device 101 may be implemented to be similar to or substantially the same as that described in reference to FIGS. 8 and 9a, so a detailed description thereof will be omitted.

In operation 1213, the first external electronic device 210 may transmit, to the second external electronic device 220, registration request including a set condition of the first external electronic device 210 and a function of the second external electronic device 220 corresponding to the set condition of the first external electronic device 210. In an embodiment, the registration request in operation 1213 may include AppID, Range, Condition, and Action. The registration request including the set condition of the first external electronic device 210 and the function of the second external electronic device 220 corresponding to the set condition of the first external electronic device 210 may be implemented to be similar to or substantially the same as that described in reference to FIGS. 8 and 9b, so a detailed description thereof will be omitted.

The second external electronic device 220 which receives the registration request from the electronic device 101 and the registration request from the first external electronic device 210, in operation 1215, may register a set condition of the electronic device 101 and a function of the second external electronic device 220 corresponding to the set condition of the electronic device 101 based on the registration request from the electronic device 101, and may register a set condition of the first external electronic device 210 and a function of the second external electronic device 220 corresponding to the set condition of the first external electronic device 210 based on the registration request from the first external electronic device 210. In operation 1215, based on the registration request from the electronic device 101 and the registration request from the first external electronic device 210, the second external electronic device 220 may register a set condition that the electronic device 101 and the first external electronic device 210 are considered and a function of the second external electronic device 220 corresponding to the set condition that the electronic device 101 and the first external electronic device 210 are considered. The operation of registering the set condition that the electronic device 101 and the first external electronic device 210 are considered and the function of the second external electronic device 220 corresponding to the set condition that the electronic device 101 and the first external electronic device 210 are considered in operation 1215 may be implemented to be similar to or substantially the same as that described in FIG. 9a or FIG. 9b, so a detailed description thereof will be omitted.

The electronic device 101 may detect (or identify) that a trigger condition, which is a condition for triggering distance measurement between the electronic device 101 and the second external electronic device 220 based on a UWB technology, is satisfied in operation 1217. The trigger condition of the electronic device may be implemented to be similar to or substantially the same as that described in FIG. 2, so a detailed description thereof will be omitted.

The electronic device which detects that the trigger condition is satisfied may measure a distance between the electronic device 101 and the second external electronic device 220 based on the UWB technology in operation 1219. The electronic device 101 may start performing an operation of measuring the distance between the electronic device 101 and the second external electronic device 220 by transmitting a poll signal to the second external electronic device 220. The second external electronic device 220 may perform the distance measurement operation between the second external electronic device 220 and the electronic device 101 as the poll signal is received from the electronic device 101.

In operation 1221, the second external electronic device 220 may detect (or identify) that the set condition of the electronic device 101 is satisfied based on the measured distance between the second external electronic device 220 and the electronic device 101, and perform the function of the second external electronic device 220 corresponding to the set condition of the electronic device 101 as the set condition of the electronic device 101 is satisfied.

The first external electronic device 210 may detect (or identify) that a trigger condition, which is a condition for triggering distance measurement between the first external electronic device 210 and the second external electronic device 220 based on the UWB technology, is satisfied in operation 1223. The trigger condition of the first external electronic device 210 may be implemented to be similar to or substantially the same as that described in FIG. 2, so a detailed description thereof will be omitted.

The first external electronic device 210 which detects that the trigger condition is satisfied may, in operation 1225, measure the distance between the first external electronic device 210 and the second external electronic device 220 based on the UWB technology. The first external electronic device 210 may start performing an operation of measuring the distance between the first external electronic device 210 and the second external electronic device 220 by transmitting a poll signal to the second external electronic device 220. The second external electronic device 220 may perform the distance measurement operation between the second external electronic device 220 and the first external electronic device 210 as the poll signal is received from the first external electronic device 210.

In operation 1227, based on the measured distance between the second external electronic device 220 and the first external electronic device 210, the second external electronic device 220 may detect (or identify) that the set condition that the electronic device 101 and the first external electronic device 210 are considered is satisfied, and perform the function of the second external electronic device 220 corresponding to the set condition that the electronic device 101 and the first external electronic device 210 are considered as the set condition that the electronic device 101 and the first external electronic device 210 are considered is satisfied.

While the function of the second external electronic device 220 corresponding to the set condition that the electronic device 101 and the first external electronic device 210 are considered is being performed, the electronic device 101 may detect (or identify) that a trigger condition, which is a condition for triggering distance measurement between the electronic device 101 and the second external electronic device 220 based on the UWB technology, is satisfied in operation 1229.

The electronic device which detects that the trigger condition is satisfied may, in operation 1231, measure the distance between the electronic device 101 and the second external electronic device 220 based on the UWB technology. The operation of measuring the distance between the electronic device 101 and the second external electronic device 220 based on the UWB technology in operation 1231 may be implemented to be similar to or substantially the same as that described in operation 1219, so a detailed description thereof will be omitted herein.

In operation 1233, based on the measured distance between the second external electronic device 220 and the electronic device 101, the second external electronic device 220 may detect (or identify) that the set condition that the electronic device 101 and the first external electronic device 210 are considered is not satisfied, and stop the function of the second external electronic device 220 corresponding to the set condition that the electronic device 101 and the first external electronic device 210 are considered as the set condition that the electronic device 101 and the first external electronic device 210 are considered is not satisfied. This case may be a case that the distance between the electronic device 101 and the second external electronic device 220 exceeds the threshold distance. Even if the distance between the electronic device 101 and the second external electronic device 220 exceeds the threshold distance, the distance between the first external electronic device 210 and the second external electronic device 220 may still be shorter than or equal to the threshold distance. Since the distance between the first external electronic device 210 and the second external electronic device 220 is shorter than or equal to the threshold distance, the set condition of the first external electronic device 210 may still be satisfied, and therefore, the second external electronic device 220 may perform only the function of the second external electronic device 220 corresponding to the set condition of the first external electronic device 210.

In operation 1235, the second external electronic device 220 may change the trigger condition used in each of the electronic device 101 and the first external electronic device 210. The second external electronic device 220 may change the trigger condition based on various parameters.

The second external electronic device 220 which changes the trigger condition may transmit the changed trigger condition to the electronic device 101 in operation 1237. The electronic device 101 which receives the changed trigger condition from the second external electronic device 220 may update the trigger condition to the received trigger condition in operation 1239.

The second external electronic device 220 may transmit the changed trigger condition to the first external electronic device 210 in operation 1241. The first external electronic device 210, which receives the changed trigger condition from the second external electronic device 220, may update the trigger condition to the received trigger condition in operation 1243.

Operations 1235 to 1243 are operations which may be performed if an update to the trigger condition is required, but may not be performed as needed.

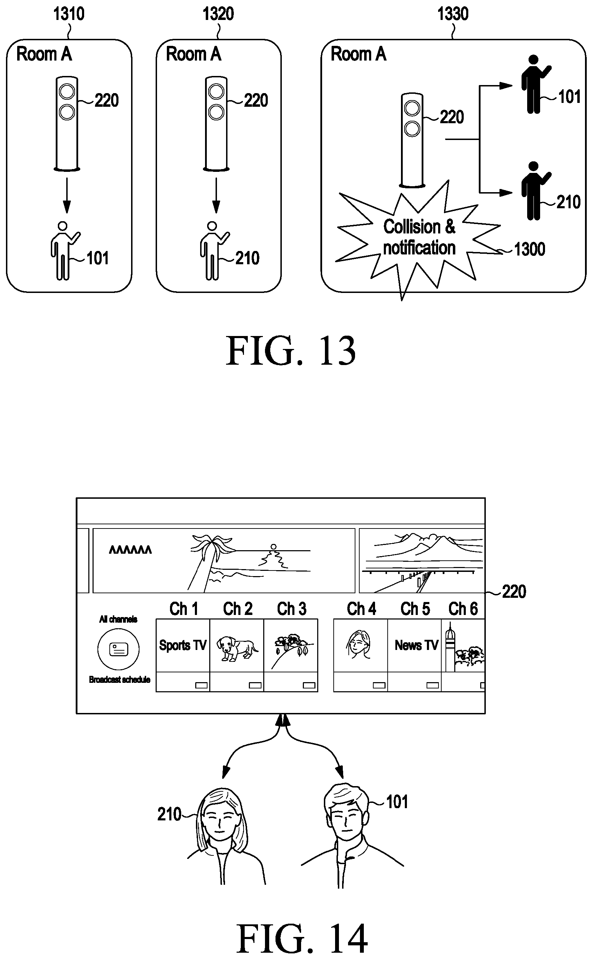

FIG. 13 is a diagram illustrating an operating process of an electronic device, a first external electronic device, and a second external electronic device according to a location-based service in a wireless communication network according to an embodiment.

An operating process of an electronic device 101 (e.g., an electronic device 101 in FIG. 1 or FIG. 2), a first external electronic device 210 (e.g., an electronic device 104 in FIG. 1 or a first external electronic device 210 in FIG. 2), and a second external electronic device 220 (e.g., an electronic device 102 in FIG. 1 or a second external electronic device(s) 220 in FIG. 2) illustrated in FIG. 13 may be an operating process according to a process for providing a location-based service (e.g., an automation service providing a multi-user automation function) described in FIG. 2. In FIG. 13, it will be assumed that the second external electronic device 220 is an air conditioner, and it will be assumed that a set condition of the electronic device 101 and a function of the second external electronic device 220 corresponding thereto, a set condition of the first external electronic device 210 and a function of the second external electronic device 220 corresponding thereto, and a set condition that the electronic device 101 and the first external electronic device 210 are considered and a function of the second external electronic device 220 corresponding thereto are the same as described in Table 2.

When the electronic device 101 enters a specific space (e.g., a Room A) and a distance between the electronic device 101 and the second external electronic device 220 in the specific space is 200 cm or less, the second external electronic device 220 may perform (1310) a cooling function set to 24 degrees based on the set condition of the electronic device 101. In an embodiment, the electronic device 101 may perform a distance measurement operation between the electronic device 101 and the second external electronic device 220 if a trigger condition is satisfied.

When the first external electronic device 210 also enters the specific space (e.g., the Room A), and a distance between the first external electronic device 210 and the second external electronic device 220 in the specific space is 200 cm or less, the second external electronic device 220 may perform (1320) a cooling function set to 18 degrees based on the set condition of the first external electronic device 210. In an embodiment, the first external electronic device 210 may perform a distance measurement operation between the first external electronic device 210 and the second external electronic device 220 if the trigger condition is satisfied.

In this way, the electronic device 101 and the first external electronic device 210 may independently control the function of the second external electronic device 220, but when the electronic device 101 and the first external electronic device 210 enter the specific space (e.g., the Room A) together, the distance between the electronic device 101 and the second external electronic device 220 in the specific space is 200 cm or less, and the distance between the first external electronic device 210 and the second external electronic device 220 is 200 cm or less, the second external electronic device 220 may perform (1330) a cooling function set to 22 degrees based on the set condition that the device 101 and the first external electronic device 210 are considered.

FIG. 14 is a diagram illustrating an operating process of an electronic device, a first external electronic device, and a second external electronic device according to a location-based service in a wireless communication network according to an embodiment.

An operating process of an electronic device 101 (e.g., an electronic device 101 in FIG. 1 or FIG. 2), a first external electronic device 210 (e.g., an electronic device 104 in FIG. 1 or a first external electronic device 210 in FIG. 2), and a second external electronic device 220 (e.g., an electronic device 102 in FIG. 1 or a second external electronic device(s) 220 in FIG. 2) illustrated in FIG. 14 may be an operating process according to a process for providing a location-based service (e.g., an automation service providing a multi-user automation function) described in FIG. 2. In FIG. 13, it will be assumed that the second external electronic device 220 is a TV, and it will be assumed that a set condition of the electronic device 101 and a function of the second external electronic device 220 corresponding thereto, a set condition of the first external electronic device 210 and a function of the second external electronic device 220 corresponding thereto, and a set condition that the electronic device 101 and the first external electronic device 210 are considered and a function of the second external electronic device 220 corresponding thereto are the same as described in Table 1.

When the electronic device 101 enters a specific space and a distance between the electronic device 101 and the second external electronic device 220 in the specific space is 100 cm or less, the second external electronic device 220 may perform a function of providing all broadcast channels (e.g., a channel 1 (CH1) to a channel 6 (CH6)) based on the set condition of the electronic device 101. In an embodiment, the electronic device 101 may perform a distance measurement operation between the electronic device 101 and the second external electronic device 220 if a trigger condition is satisfied.

When the first external electronic device also enters the specific space, and a distance between the first external electronic device 210 and the second external electronic device 220 in the specific space is 100 cm or less, the second external electronic device 220 may perform a function of providing limited broadcast channels (e.g., a channel 1 to a channel 3) based on the set condition of the first external electronic device 210. In an embodiment, the first external electronic device 210 may perform a distance measurement operation between the first external electronic device 210 and the second external electronic device 220 if the trigger condition is satisfied.

In this way, the electronic device 101 and the first external electronic device 210 may independently control the function of the second external electronic device 220, but when the electronic device 101 and the first external electronic device 210 enter the specific space together, the distance between the electronic device 101 and the second external electronic device 220 in the specific space is 100 cm or less, and the distance between the first external electronic device 210 and the second external electronic device 220 is 100 cm or less, the second external electronic device 220 may perform the function of providing the limited broadcast channels based on the set condition that the device 101 and the first external electronic device 210 are considered.

According to an embodiment of the disclosure, an operating method of an electronic device (e.g., an electronic device 202 in FIG. 1, or a second external electronic device 220 in FIG. 2 or FIG. 5) may include measuring a first distance between the electronic device (e.g., the electronic device 202 in FIG. 1, or the second external electronic device 220 in FIG. 2 or FIG. 5) and a first external electronic device (e.g., an electronic device 101 in FIG. 1, FIG. 2, or FIG. 3) and a second distance between the electronic device (e.g., the electronic device 202 in FIG. 1, or the second external electronic device 220 in FIG. 2 or FIG. 5) and a second external electronic device (e.g., a first external electronic device 210 in FIG. 2 or FIG. 4).

According to an embodiment of the disclosure, the operating method may further include, based on the first distance and the second distance, identifying whether a first condition that the first external electronic device (e.g., the electronic device 101 in FIG. 1, FIG. 2, or FIG. 3) and the second external electronic device (e.g., the first external electronic device 210 in FIG. 2 or FIG. 4) exist in a designated area is satisfied.

According to an embodiment of the disclosure, the operating method may further include, based on identifying that the first condition is satisfied, identifying whether a function of the electronic device (e.g., the electronic device 202 in FIG. 1, or the second external electronic device 220 in FIG. 2 or FIG. 5) corresponding to the first condition is registered.

According to an embodiment of the disclosure, the operating method may further include, based on identifying that the function of the electronic device (e.g., the electronic device 202 in FIG. 1, or the second external electronic device 220 in FIG. 2 or FIG. 5) corresponding to the first condition is registered, performing the function of the electronic device (e.g., the electronic device 202 in FIG. 1, or the second external electronic device 220 in FIG. 2 or FIG. 5) corresponding to the first condition.

According to an embodiment of the disclosure, the first distance may be measured if a second condition that triggers distance measurement between the electronic device (e.g., the electronic device 202 in FIG. 1, or the second external electronic device 220 in FIG. 2 or FIG. 5) and the first external electronic device (e.g., the electronic device 101 in FIG. 1, FIG. 2, or FIG. 3) is satisfied by the first external electronic device (e.g., the electronic device 101 in FIG. 1, FIG. 2, or FIG. 3).

According to an embodiment of the disclosure, the second distance may be measured if a third condition that triggers distance measurement between the electronic device (e.g., the electronic device 202 in FIG. 1, or the second external electronic device 220 in FIG. 2 or FIG. 5) and the second external electronic device (e.g., the first external electronic device 210 in FIG. 2 or FIG. 4) is satisfied by the second external electronic device (e.g., the first external electronic device 210 in FIG. 2 or FIG. 4). According to an embodiment of the disclosure, the electronic device (e.g., the electronic device 202 in FIG. 1, or the second external electronic device 220 in FIG. 2 or FIG. 5) may further include a display (e.g., a display 510 in FIG. 5).

According to an embodiment of the disclosure, the operating method may further include, based on identifying that the function of the electronic device (e.g., the electronic device 202 in FIG. 1, or the second external electronic device 220 in FIG. 2 or FIG. 5) corresponding to the first condition is not registered, outputting information indicating that the first external electronic device (e.g., the electronic device 101 in FIG. 1, FIG. 2, or FIG. 3) and the second external electronic device (e.g., the first external electronic device 210 in FIG. 2 or FIG. 4) exist in the designated area.

According to an embodiment of the disclosure, the operating method may further include, while performing the function of the electronic device (e.g., the electronic device 202 in FIG. 1, or the second external electronic device 220 in FIG. 2 or FIG. 5) corresponding to the first condition, measuring the first distance and the second distance.

According to an embodiment of the disclosure, the operating method may further include, based on the measured first distance and the measured second distance, identifying whether the first condition is satisfied.

According to an embodiment of the disclosure, the operating method may further include, based on identifying that the first condition is not satisfied, stopping an operation of performing the function of the electronic device (e.g., the electronic device 202 in FIG. 1, or the second external electronic device 220 in FIG. 2 or FIG. 5) corresponding to the first condition.

According to an embodiment of the disclosure, the first condition may include a condition that each of the first distance and the second distance is shorter than or equal to a threshold distance.

According to an embodiment of the disclosure, the operating method may further include storing the first condition in a format including an identifier of the first external electronic device (e.g., the electronic device 101 in FIG. 1, FIG. 2, or FIG. 3), an identifier of the second external electronic device (e.g., the first external electronic device 210 in FIG. 2 or FIG. 4), a condition indicating that the first external electronic device (e.g., the electronic device 101 in FIG. 1, FIG. 2, or FIG. 3) and the second external electronic device (e.g., the first external electronic device 210 in FIG. 2 or FIG. 4) exist in a designated area, and the threshold distance.

According to an embodiment of the disclosure, distance measurement between the electronic device (e.g., the electronic device 202 in FIG. 1, or the second external electronic device 220 in FIG. 2 or FIG. 5) and the first external electronic device (e.g., the electronic device 101 in FIG. 1, FIG. 2, or FIG. 3), and distance measurement between the electronic device (e.g., the electronic device 202 in FIG. 1, or the second external electronic device 220 in FIG. 2 or FIG. 5) and the second external electronic device (e.g., the first external electronic device 210 in FIG. 2 or FIG. 4) may be based on a ultra wide band (UWB) technology.

According to an embodiment of the disclosure, the second condition may be based at least on movement information or health information of the first external electronic device (e.g., the electronic device 101 in FIG. 1, FIG. 2, or FIG. 3).

According to an embodiment of the disclosure, the second condition may include at least one of a condition that amount of change in movement of the first external electronic device (e.g., the electronic device 101 in FIG. 1, FIG. 2, or FIG. 3) during set time is greater than or equal to threshold amount of change, a condition that a distance moved by the first external electronic device (e.g., the electronic device 101 in FIG. 1, FIG. 2, or FIG. 3) from a location at which the first distance was last measured is longer than or equal to a threshold distance, a condition that has a history of increasing a distance between the first external electronic device (e.g., the electronic device 101 in FIG. 1, FIG. 2, or FIG. 3) and the electronic device (e.g., the electronic device 202 in FIG. 1, or the second external electronic device 220 in FIG. 2 or FIG. 5), a condition that time during which the first external electronic device (e.g., the electronic device 101 in FIG. 1, FIG. 2, or FIG. 3) stays in an area at which the first distance is last measured is shorter than threshold time, a condition that a user of the first external electronic device (e.g., the electronic device 101 in FIG. 1, FIG. 2, or FIG. 3) is not in motion, or condition that time elapsed from time at which the first external electronic device (e.g., the electronic device 101 in FIG. 1, FIG. 2, or FIG. 3) last measured the first distance is longer than or equal to threshold time.

According to an embodiment of this disclosure, the movement information of the first external electronic device (e.g., the electronic device 101 in FIG. 1, FIG. 2, or FIG. 3) may include at least one of a moving speed, a moving direction, or a moving distance of the first external electronic device (e.g., the electronic device 101 in FIG. 1, FIG. 2, or FIG. 3).

According to an embodiment of this disclosure, the health information of the first external electronic device (e.g., the electronic device 101 in FIG. 1, FIG. 2, or FIG. 3) may include at least one of biometric information of a user of the first external electronic device (e.g., the electronic device 101 in FIG. 1, FIG. 2, or FIG. 3), a personal profile of the user of the first external electronic device (e.g., the electronic device 101 in FIG. 1, FIG. 2, or FIG. 3), or exercise information of the user.

According to an embodiment of this disclosure, the movement of the first external electronic device (e.g., the electronic device 101 in FIG. 1, FIG. 2, or FIG. 3) may be identified based on at least one of an acceleration signal or an angular velocity signal detected in the first external electronic device (e.g., the electronic device 101 in FIG. 1, FIG. 2, or FIG. 3).

According to an embodiment of the disclosure, the third condition may be based at least on movement information or health information of the second external electronic device (e.g., the first external electronic device 210 in FIG. 2 or FIG. 4).

According to an embodiment of the disclosure, the third condition may include at least one of a condition that amount of change in movement of the second external electronic device (e.g., the first external electronic device 210 in FIG. 2 or FIG. 4) during set time is greater than or equal to threshold amount of change, a condition that a distance moved by the second external electronic device (e.g., the first external electronic device 210 in FIG. 2 or FIG. 4) from a location at which the second distance was last measured is longer than or equal to a threshold distance, a condition that has a history of increasing a distance between the second external electronic device (e.g., the first external electronic device 210 in FIG. 2 or FIG. 4) and the electronic device (e.g., the electronic device 202 in FIG. 1, or the second external electronic device 220 in FIG. 2 or FIG. 5), a condition that time during which the second external electronic device (e.g., the first external electronic device 210 in FIG. 2 or FIG. 4) stays in an area at which the second distance is last measured is shorter than threshold time, a condition that a user of the second external electronic device (e.g., the first external electronic device 210 in FIG. 2 or FIG. 4) is not in motion, or condition that time elapsed from time at which the second external electronic device (e.g., the first external electronic device 210 in FIG. 2 or FIG. 4) last measured the second distance is longer than or equal to threshold time.

According to an embodiment of this disclosure, the movement information of the second external electronic device (e.g., the first external electronic device 210 in FIG. 2 or FIG. 4) may include at least one of a moving speed, a moving direction, or a moving distance of the second external electronic device (e.g., the first external electronic device 210 in FIG. 2 or FIG. 4).

According to an embodiment of this disclosure, the health information of the second external electronic device (e.g., the first external electronic device 210 in FIG. 2 or FIG. 4) may include at least one of biometric information of a user of the second external electronic device (e.g., the first external electronic device 210 in FIG. 2 or FIG. 4), a personal profile of the user of the second external electronic device (e.g., the first external electronic device 210 in FIG. 2 or FIG. 4), or exercise information of the user.

According to an embodiment of this disclosure, the movement of the second external electronic device (e.g., the first external electronic device 210 in FIG. 2 or FIG. 4) may be identified based on at least one of an acceleration signal or an angular velocity signal detected in the second external electronic device (e.g., the first external electronic device 210 in FIG. 2 or FIG. 4).

According to an embodiment of the disclosure, the operating method may further include changing the second condition and the third condition.

According to an embodiment of the disclosure, the operating method may further include transmitting the changed second condition to the first external electronic device (e.g., the electronic device 101 in FIG. 1, FIG. 2, or FIG. 3).

According to an embodiment of the disclosure, the operating method may further include transmitting the changed third condition to the second external electronic device (e.g., the first external electronic device 210 in FIG. 2 or FIG. 4).

According to an embodiment of the disclosure, the operating method may further include receiving, from the first external electronic device (e.g., the electronic device 101 in FIG. 1, FIG. 2, or FIG. 3), a registration request including the first condition and the function of the electronic device (e.g., the electronic device 202 in FIG. 1, or the second external electronic device 220 in FIG. 2 or FIG. 5) corresponding to the first condition.

According to an embodiment of the disclosure, the operating method may further include, in response to the registration request, registering the first condition and the function of the electronic device (e.g., the electronic device 202 in FIG. 1, or the second external electronic device 220 in FIG. 2 or FIG. 5) corresponding to the first condition.

According to an embodiment of the disclosure, the operating method may further include receiving, from the second external electronic device (e.g., the first external electronic device 210 in FIG. 2 or FIG. 4), a registration request including the first condition and the function of the electronic device (e.g., the electronic device 202 in FIG. 1, or the second external electronic device 220 in FIG. 2 or FIG. 5) corresponding to the first condition.

According to an embodiment of the disclosure, the operating method may further include, in response to the registration request, registering the first condition and the function of the electronic device (e.g., the electronic device 202 in FIG. 1, or the second external electronic device 220 in FIG. 2 or FIG. 5) corresponding to the first condition.

According to an embodiment of the disclosure, an operating method of an electronic device (e.g., an electronic device 101 in FIG. 1, FIG. 2, or FIG. 3) may include registering, with a second external electronic device (e.g., an electronic device 102 in FIG. 1, or a second external electronic device 220 in FIG. 2 or FIG. 3), a first condition that the electronic device (e.g., the electronic device 101 in FIG. 1, FIG. 2, or FIG. 3) and a first external electronic device (e.g., an electronic device 104 in FIG. 1, or a first external electronic device 210 in FIG. 2 or FIG. 4) exist in a designated area, and a function of the second external electronic device (e.g., the electronic device 102 in FIG. 1, or the second external electronic device 220 in FIG. 2 or FIG. 3) corresponding to the first condition.

According to an embodiment of the disclosure, the operating method may further include identifying whether a second condition which triggers distance measurement between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3) is satisfied.

According to an embodiment of the disclosure, the operating method may further include, based on identifying that the second condition is satisfied, measuring a first distance between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3).

According to an embodiment of the disclosure, the operating method may further include, after measuring the first distance, identifying whether the second condition is satisfied.

According to an embodiment of the disclosure, the operating method may further include, based on identifying that the second condition is satisfied, measuring the first distance via the at least one communication circuit (e.g., the communication module 190 in FIG. 1 or the communication circuit 302 in FIG. 3).

According to an embodiment of the disclosure, the first condition may include a condition that each of the first distance and a second distance between the first external electronic device (e.g., the electronic device 104 in FIG. 1, or the first external electronic device 210 in FIG. 2 or FIG. 4) and the second external electronic device (e.g., the electronic device 102 in FIG. 1, or the second external electronic device 220 in FIG. 2 or FIG. 3) is shorter than or equal to a threshold distance.

According to an embodiment of the disclosure, the first condition may be registered with the second external electronic device (e.g., the electronic device 102 in FIG. 1, or the second external electronic device 220 in FIG. 2 or FIG. 3) in a format including an identifier of the electronic device (e.g., the electronic device 101 in FIG. 1, FIG. 2, or FIG. 3), an identifier of the first external electronic device (e.g., the electronic device 104 in FIG. 1, or the first external electronic device 210 in FIG. 2 or FIG. 4), a condition indicating that the electronic device (e.g., the electronic device 101 in FIG. 1, FIG. 2, or FIG. 3) and the first external electronic device (e.g., the electronic device 104 in FIG. 1, or the first external electronic device 210 in FIG. 2 or FIG. 4) exist in a designated area, and the threshold distance.

According to an embodiment of the disclosure, distance measurement between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 2), and distance measurement between the first external electronic device (e.g., the electronic device 104 in FIG. 1, or the first external electronic device 210 in FIG. 2 or FIG. 4) and the second external electronic device (e.g., the electronic device 102 in FIG. 1, or the second external electronic device 220 in FIG. 2 or FIG. 3) may be based on a ultra wide band (UWB) technology.

According to an embodiment of the disclosure, the second condition may be based at least on movement information or health information of the electronic device (e.g., the electronic device 101 in FIG. 1, FIG. 2, or FIG. 3).

According to an embodiment of the disclosure, the second condition may include at least one of a condition that amount of change in movement of the electronic device (e.g., the electronic device 101 in FIG. 1, FIG. 2, or FIG. 3) during set time is greater than or equal to threshold amount of change, a condition that a distance moved by the electronic device (e.g., the electronic device 101 in FIG. 1, FIG. 2, or FIG. 3) from a location at which the first distance was last measured is longer than or equal to a threshold distance, a condition that has a history of increasing a distance between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3), a condition that time during which the electronic device (e.g., the electronic device 101 in FIG. 1, FIG. 2, or FIG. 3) stays in an area at which the first distance is last measured is shorter than threshold time, a condition that a user of the electronic device (e.g., the electronic device 101 in FIG. 1, FIG. 2, or FIG. 3) is not in motion, or condition that time elapsed from time at which the electronic device (e.g., the electronic device 101 in FIG. 1, FIG. 2, or FIG. 3) last measured the first distance is longer than or equal to threshold time.

According to an embodiment of the disclosure, the electronic device (e.g., the electronic device 101 in FIG. 1, FIG. 2, or FIG. 3) may further include at least one sensor (e.g., a sensor module 176 in FIG. 1, or a sensor module 312 in FIG. 3).

According to an embodiment of the disclosure, the at least one sensor (e.g., the sensor module 176 in FIG. 1, or the sensor module 312 in FIG. 3) may include at least one of an acceleration sensor, or an angular velocity sensor.

According to an embodiment of the disclosure, the movement information of the electronic device (e.g., the electronic device 101 in FIG. 1, FIG. 2, or FIG. 3) includes at least one of a moving speed, a moving direction, or a moving distance of the electronic device (e.g., the electronic device 101 in FIG. 1, FIG. 2, or FIG. 3).

According to an embodiment of the disclosure, the health information of the electronic device (e.g., the electronic device 101 in FIG. 1, FIG. 2, or FIG. 3) may include at least one of biometric information of a user of the electronic device (e.g., the electronic device 101 in FIG. 1, FIG. 2, or FIG. 3), a personal profile of the user of the electronic device (e.g., the electronic device 101 in FIG. 1, FIG. 2, or FIG. 3), or exercise information of the user.

According to an embodiment of the disclosure, the at least one sensor (e.g., the sensor module 176 in FIG. 1, or the sensor module 312 in FIG. 3) may include the acceleration sensor.

According to an embodiment of the disclosure, the movement of the electronic device (e.g., the electronic device 101 in FIG. 1, FIG. 2, or FIG. 3) may be identified based on an acceleration signal detected by the acceleration sensor.

According to an embodiment of the disclosure, if amount of change in a direct current (DC) value of the acceleration signal during the set time is greater than or equal to the threshold amount of change, the amount of change in the movement of the electronic device (e.g., the electronic device 101 in FIG. 1, FIG. 2, or FIG. 3) may be identified as being greater than or equal to the threshold amount of change.

According to an embodiment of the disclosure, the at least one sensor (e.g., the sensor module 176 in FIG. 1, or the sensor module 312 in FIG. 3) may include the angular velocity sensor.

According to an embodiment of the disclosure, the movement of the electronic device (e.g., the electronic device 101 in FIG. 1, FIG. 2, or FIG. 3) may be identified based on an angular velocity signal detected by the angular velocity sensor.

According to an embodiment of the disclosure, if amount of change in a direct current (DC) value of the angular velocity signal during the set time is greater than or equal to the threshold amount of change, the amount of change in the movement of the electronic device (e.g., the electronic device 101 in FIG. 1, FIG. 2, or FIG. 3) may be identified as being greater than or equal to the threshold amount of change.

According to an embodiment of the disclosure, the operating method may further include, receiving a changed second condition from the second external electronic device (e.g., the electronic device 102 in FIG. 1, or the second external electronic device 220 in FIG. 2 or FIG. 3).

According to an embodiment of the disclosure, the operating method may further include updating, as the changed second condition, the second condition which triggers distance measurement between the electronic device (e.g., the electronic device 101 in FIG. 1, FIG. 2, or FIG. 3) and the second external electronic device (e.g., the electronic device 102 in FIG. 1, or the second external electronic device 220 in FIG. 2 or FIG. 3).

**Claims**

1. An electronic device (102; 220), comprising:

    at least one communication circuit (502); and
    at least one processor (504) operably connected to the at least one communication circuit, wherein the at least one processor is configured to:

        measure, via the at least one communication circuit, a first distance between the electronic device and a first external electronic device (101) and a second distance between the electronic device and a second external electronic device (210),
        based on the first distance and the second distance, identify whether a first condition that the first external electronic device and the second external electronic device exist in a designated area is satisfied,
        based on identifying that the first condition is satisfied, identify whether a function of the electronic device corresponding to the first condition is registered, and
        based on identifying that the function of the electronic device corresponding to the first condition is registered, perform the function of the electronic device corresponding to the first condition,
        wherein the first distance is measured if a second condition that triggers distance measurement between the electronic device and the first external electronic device is satisfied by the first external electronic device, and
        wherein the second distance is measured if a third condition that triggers distance measurement between the electronic device and the second external electronic device is satisfied by the second external electronic device.

2. The electronic device of claim 1, further comprising:

    a display (510),
    wherein the at least one processor is further configured to:
    based on identifying that the function of the electronic device corresponding to the first condition is not registered, output, via the display, information indicating that the first external electronic device and the second external electronic device exist in the designated area.

3. The electronic device of claim 1 or 2, wherein the at least one processor is further configured to:

while performing the function of the electronic device corresponding to the first condition, measure the first distance and the second distance via the at least one communication circuit,

based on the measured first distance and the measured second distance, identify whether the first condition is satisfied, and

based on identifying that the first condition is not satisfied, stop an operation of performing the function of the electronic device corresponding to the first condition.

4. The electronic device of any one of claims 1 to 3, further comprising:

memory (506),

wherein the first condition includes a condition that each of the first distance and the second distance is shorter than or equal to a threshold distance, and

wherein the at least one processor is further configured to:

store the first condition in the memory in a format including an identifier of the first external electronic device, an identifier of the second external electronic device, a condition indicating that the first external electronic device and the second external electronic device exist in a designated area, and the threshold distance.

5. The electronic device of any one of claims 1 to 4, wherein the second condition is based at least on movement information or health information of the first external electronic device, and

wherein the second condition includes at least one of a condition that amount of change in movement of the first external electronic device during set time is greater than or equal to threshold amount of change, a condition that a distance moved by the first external electronic device from a location at which the first distance was last measured is longer than or equal to a threshold distance, a condition that has a history of increasing a distance between the first external electronic device and the electronic device, a condition that time during which the first external electronic device stays in an area at which the first distance is last measured is shorter than threshold time, a condition that a user of the first external electronic device is not in motion, or condition that time elapsed from time at which the first external electronic device last measured the first distance is longer than or equal to threshold time.

6. The electronic device of any one of claims 1 to 4, wherein the third condition is based at least on movement information or health information of the second external electronic device, and

wherein the third condition includes at least one of a condition that amount of change in movement of the second external electronic device during set time is greater than or equal to threshold amount of change, a condition that a distance moved by the second external electronic device from a location at which the second distance was last measured is longer than or equal to a threshold distance, a condition that has a history of increasing a distance between the second external electronic device and the electronic device, a condition that time during which the second external electronic device stays in an area at which the second distance is last measured is shorter than threshold time, a condition that a user of the second external electronic device is not in motion, or condition that time elapsed from time at which the second external electronic device last measured the second distance is longer than or equal to threshold time.

7. The electronic device of any one of claims 1 to 6, wherein the at least one processor is further configured to:

change the second condition and the third condition,

transmit, via the at least one communication circuit, the changed second condition to the first external electronic device, and

transmit, via the at least one communication circuit, the changed third condition to the second external electronic device.

8. The electronic device of any one of claims 1 to 7, wherein the at least one processor is further configured to:

receive, from the first external electronic device, via the at least one communication circuit, a registration request including the first condition and the function of the electronic device corresponding to the first condition, and

in response to the registration request, register the first condition and the function of the electronic device corresponding to the first condition.

9. The electronic device of any one of claims 1 to 7, wherein the at least one processor is further configured to:

receive, from the second external electronic device, via the at least one communication circuit, a registration request including the first condition and the function of the electronic device corresponding to the first condition, and

in response to the registration request, register the first condition and the function of the electronic device corresponding to the first condition.

10. An electronic device (101), comprising:

at least one communication circuit (190; 302); and
at least one processor (120; 304) operably connected to the at least one communication circuit, wherein the at least one processor is configured to:

register, via the at least one communication circuit, with a second external electronic device (102; 220), a first condition that the electronic device and a first external electronic device (104; 210) exist in a designated area, and a function of the second external electronic device corresponding to the first condition,
identify whether a second condition which triggers distance measurement between the electronic device and the second external electronic device is satisfied,
based on identifying that the second condition is satisfied, measure, via the at least one communication circuit, a first distance between the electronic device and the second external electronic device,
after measuring the first distance, identify whether the second condition is satisfied, and
based on identifying that the second condition is satisfied, measure the first distance via the at least one communication circuit.

11. The electronic device of claim 10, wherein the first condition includes a condition that each of the first distance and a second distance between the first external electronic device and the second external electronic device is shorter than or equal to a threshold distance, and
wherein the first condition is registered with the second external electronic device in a format including an identifier of the electronic device, an identifier of the first external electronic device, a condition indicating that the electronic device and the first external electronic device exist in a designated area, and the threshold distance.

12. The electronic device of claim 10 or 11, wherein the second condition is based at least on movement information or health information of the electronic device, and
wherein the second condition includes at least one of a condition that amount of change in movement of the electronic device during set time is greater than or equal to threshold amount of change, a condition that a distance moved by the electronic device from a location at which the first distance was last measured is longer than or equal to a threshold distance, a condition that has a history of increasing a distance between the electronic device and the second external electronic device, a condition that time during which the electronic device stays in an area at which the first distance is last measured is shorter than threshold time, a condition that a user of the electronic device is not in motion, or condition that time elapsed from time at which the electronic device last measured the first distance is longer than or equal to threshold time.

13. The electronic device of claim 12, further comprising:

at least one sensor (176; 312),
wherein the at least one sensor includes at least one of an acceleration sensor, or an angular velocity sensor,
wherein the movement information of the electronic device includes at least one of a moving speed, a moving direction, or a moving distance of the electronic device, and
wherein the health information of the electronic device includes at least one of biometric information of a user of the electronic device, a personal profile of the user of the electronic device, or exercise information of the user.

14. The electronic device of claim 13, wherein the at least one sensor includes the acceleration sensor,

wherein the movement of the electronic device is identified based on an acceleration signal detected by the acceleration sensor, and
wherein, if amount of change in a direct current (DC) value of the acceleration signal during the set time is greater than or equal to the threshold amount of change, the amount of change in the movement of the electronic device is identified as being greater than or equal to the threshold amount of change.

15. The electronic device of claim 13, wherein the at least one sensor includes the angular velocity sensor,

wherein the movement of the electronic device is identified based on an angular velocity signal detected by the angular velocity sensor, and

wherein, if amount of change in a direct current (DC) value of the angular velocity signal during the set time is greater than or equal to the threshold amount of change, the amount of change in the movement of the electronic device is identified as being greater than or equal to the threshold amount of change.

FIG. 1

EP 4 564 855 A1

FIG. 2

301   301

Communication circuit   302

Processor   304

Memory   306

Interface   308

Display   310

Sensor module   312

Camera module   314

Input module   316

101

FIG. 3

FIG. 4

~501  ~501

| Communication circuit | ~502 |

| Processor | ~504 |

| Memory | ~506 |  ~220

| Interface | ~508 |

| Display | ~510 |

| Input module | ~512 |

# FIG. 5

EP 4 564 855 A1

~601    ~601

Communication circuit    ~602

Processor    ~604

Memory    ~606    ~230

Interface    ~608

Display    ~610

FIG. 6

46

FIG. 7

START

MEASURE DISTANCE BETWEEN ELECTRONIC DEVICE AND SECOND EXTERNAL ELECTRONIC DEVICE AND DISTANCE BETWEEN FIRST EXTERNAL ELECTRONIC DEVICE AND SECOND EXTERNAL ELECTRONIC DEVICE — 811

IS SET CONTION SATISIFIED? — 813

NO

YES

IS FUNCTION CORRESPONDING TO SET CONTION REGISTERED? — 815

NO

OUTPUT INFORMATION INDICATING THAT FIRST EXTERNAL ELECTRONIC DEVICE AND SECOND EXTERNAL ELECTRONIC DEVICE EXIST IN THE SAME SPACE — 819

YES

PERFORM FUNCTION CORRESPONDING TO SET CONTION — 817

END

FIG. 8

START

REGISTER SET CONDITION OF ELECTRONIC DEVICE AND FUNCTION CORRESPONDING TO SET CONTION — 911

REGISTER SET CONDITION OF FIRST EXTERNAL ELECTRONIC DEVICE AND FUNCTION CORRESPONDING TO SET CONTION — 913

REGISTER SET CONDITION THAT ELECTRONIC DEVICE AND FIRST EXTERNAL ELECTRONIC DEVICE ARE CONSIDERED AND FUNCTION CORRESPONDING TO SET CONTION — 915

END

FIG. 9A

START

REGISTER SET CONDITION OF
ELECTRONIC DEVICE AND FUNCTION
CORRESPONDING TO SET CONTION — 911

REGISTER SET CONDITION OF
FIRST EXTERNAL ELECTRONIC DEVICE AND
FUNCTION CORRESPONDING TO SET CONTION — 913

OUTPUT INFORMATION REQUESTING TO
REGISTER SET CONDITION THAT ELECTRONIC
DEVICE AND FIRST EXTERNAL ELECTRONIC
DEVICE ARE CONSIDERED AND FUNCTION
CORRESPONDING TO SET CONTION — 951

IS SET CONDITION
THAT ELECTRONIC DEVICE AND
FIRST EXTERNAL ELECTRONIC DEVICE
ARE CONSIDERED AND FUNCTION
CORRESPONDING TO SET
CONTION INPUTTED? — 953

NO

YES

REGISTER INPUTTED SET CONDITION THAT
ELECTRONIC DEVICE AND FIRST EXTERNAL
ELECTRONIC DEVICE ARE CONSIDERED AND
FUNCTION CORRESPONDING TO SET CONTION — 955

REGISTER SET CONDITION THAT
ELECTRONIC DEVICE AND FIRST
EXTERNAL ELECTRONIC DEVICE ARE
CONSIDERED AND FUNCTION
CORRESPONDING TO SET CONTION — 957

END

FIG. 9B

START

REGISTER SET CONDITION AND FUNCTION CORRESPONDING TO SET CONTION — 1011

DETECT THAT TRIGGER CONDITION IS SATISFIED — 1013

MEASURE DISTANCE BETWEEN ELECTRONIC DEVICE AND SECOND EXTERNAL ELECTRONIC DEVICE — 1015

DETECT THAT TRIGGER CONDITION IS SATISFIED — 1017

MEASURE DISTANCE BETWEEN ELECTRONIC DEVICE AND SECOND EXTERNAL ELECTRONIC DEVICE — 1019

END

FIG. 10

START

REGISTER SET CONDITION AND FUNCTION
CORRESPONDING TO SET CONTION ~1111

DETECT THAT TRIGGER CONDITION IS SATISFIED ~1113

MEASURE DISTANCE BETWEEN FIRST
EXTERNAL ELECTRONIC DEVICE AND
SECOND EXTERNAL ELECTRONIC DEVICE ~1115

DETECT THAT TRIGGER CONDITION IS SATISFIED ~1117

MEASURE DISTANCE BETWEEN
FIRST EXTERNAL ELECTRONIC DEVICE AND
SECOND EXTERNAL ELECTRONIC DEVICE ~1119

END

FIG. 11

FIG. 12A

101
Electronic device

220
Second external electronic device

210
First external electronic device

Detect that trigger condition is satisfied ~1229

1231 ~ Distance measurement operation

Detect that set condition that electronic device and first external electronic device are considered is not satisfied and set condition of first external electronic device is satisfied, and perform function correspondig to set condition of first external electronic device ~1233

Change trigger condition ~1235

1237 ~ Changed trigger condition

Update trigger condition ~1239

Changed trigger condition ~1241

Update trigger condition ~1243

FIG. 12B

FIG. 13

FIG. 14

## INTERNATIONAL SEARCH REPORT

| International application No. |
| --- |
| **PCT/KR2023/009167** |

| A. | CLASSIFICATION OF SUBJECT MATTER |
| --- | --- |

**H04W 4/02**(2009.01)i; **H04W 4/029**(2018.01)i; **A61B 5/103**(2006.01)i; **G01S 13/02**(2006.01)i

According to International Patent Classification (IPC) or to both national classification and IPC

| B. | FIELDS SEARCHED |
| --- | --- |

Minimum documentation searched (classification system followed by classification symbols)

H04W 4/02(2009.01); G03B 13/20(2006.01); G03B 13/36(2006.01); H04L 12/12(2006.01); H04L 12/28(2006.01); H04L 9/32(2006.01); H04W 4/021(2018.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: distance measurement, trigger condition, area, register, function

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2020-0036571 A (SAMSUNG ELECTRONICS CO., LTD.) 07 April 2020 (2020-04-07)<br>See paragraphs [0070]-[0161]; and claim 1. | 1-15 |
| A | KR 10-2017-0054862 A (SAMSUNG ELECTRONICS CO., LTD.) 18 May 2017 (2017-05-18)<br>See paragraphs [0033]-[0087]; and claim 1. | 1-15 |
| A | WO 2017-209333 A1 (LG ELECTRONICS INC.) 07 December 2017 (2017-12-07)<br>See paragraphs [0294]-[0301]; and figure 14. | 1-15 |
| A | WO 2022-025630 A1 (SAMSUNG ELECTRONICS CO., LTD.) 03 February 2022 (2022-02-03)<br>See paragraphs [0066]-[0070]; and figure 5. | 1-15 |
| A | KR 10-2006-0068896 A (PANTECH CO., LTD.) 21 June 2006 (2006-06-21)<br>See paragraphs [0027]-[0032]; and figure 5. | 1-15 |

☐ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **20 September 2023** | **21 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/009167**

| Patent document cited in search report | | | Publication date (day/month/year) | Patent family member(s) | | | Publication date (day/month/year) |
|---|---|---|---|---|---|---|---|
| KR | 10-2020-0036571 | A | 07 April 2020 | US | 2021-0409896 | A1 | 30 December 2021 |
| | | | | WO | 2020-067785 | A1 | 02 April 2020 |
| KR | 10-2017-0054862 | A | 18 May 2017 | EP | 3341750 | A1 | 04 July 2018 |
| | | | | EP | 3341750 | B1 | 19 February 2020 |
| | | | | KR | 10-2478002 | B1 | 15 December 2022 |
| | | | | US | 10285152 | B2 | 07 May 2019 |
| | | | | US | 10880860 | B2 | 29 December 2020 |
| | | | | US | 2017-0135061 | A1 | 11 May 2017 |
| | | | | US | 2019-0261306 | A1 | 22 August 2019 |
| | | | | WO | 2017-082638 | A1 | 18 May 2017 |
| WO | 2017-209333 | A1 | 07 December 2017 | KR | 10-2017-0136759 | A | 12 December 2017 |
| WO | 2022-025630 | A1 | 03 February 2022 | KR | 10-2022-0015752 | A | 08 February 2022 |
| KR | 10-2006-0068896 | A | 21 June 2006 | KR | 10-0626967 | B1 | 21 September 2006 |

Form PCT/ISA/210 (patent family annex) (July 2022)